(19) Europäisches Patentamt
European Patent Office
Office européen des brevets

(11) **EP 4 564 693 A1**

(12) **EUROPEAN PATENT APPLICATION**
published in accordance with Art. 153(4) EPC

(43) Date of publication:
**04.06.2025 Bulletin 2025/23**

(21) Application number: **22955995.0**

(22) Date of filing: **23.08.2022**

(51) International Patent Classification (IPC):
**H04B 7/06** (2006.01)

(52) Cooperative Patent Classification (CPC):
**H04B 7/06**

(86) International application number:
**PCT/CN2022/114342**

(87) International publication number:
**WO 2024/040446 (29.02.2024 Gazette 2024/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **GAO, Ning
Dongguan, Guangdong 523860 (CN)**
• **HUANG, Lei
Singapore 049483 (SG)**

(74) Representative: **Penza, Giancarlo
Bugnion S.p.A.
Viale Lancetti, 17
20158 Milano (IT)**

(54) **INFORMATION INDICATION METHOD AND APPARATUS, AND COMMUNICATION DEVICE**

(57) The present application provides an information indication method and apparatus, and a communication device. The method comprises: a first STA sends to one or more second STAs at least one of first information, second information and third information, wherein the first information is used for indicating a space-time stream sequence number of a Golay sequence used by a sensing PPDU, the second information is used for indicating a type of the sensing PPDU, and the third information is used for indicating a sensing field type used by the sensing PPDU.

| |
|---|
| The first STA transmits at least one piece of the first information, the second information or the third information to one or more second STAs — 1101 |

| |
|---|
| The second STA receives at least one piece of the first information, the second information or the third information transmitted by the first STA. The first information is configured to indicate a Space-time Stream index of Golay Sequence used by a sensing PPDU, the second information is configured to indicate a type of the sensing PPDU, and the third information is configured to indicate a type of sensing field used by the sensing PPDU — 1102 |

**FIG. 11**

**Description**

TECHNICAL FIELD

Embodiments of the present disclosure relate to the technical field of short-distance communication, and in particular to an information indication method and apparatus, and a communication device.

BACKGROUND

In sensing communication, a Station (STA) participating in the sensing transmits and/or receives a sensing Physical Layer Protocol Data Unit (PPDU), thereby realizing sensing measurement. However, when multiple STAs simultaneously transmit and/or receive the sensing PPDU, there may be mutual interference between the STAs, and finally, the accuracy of the sensing measurement is affected. Furthermore, the type of the sensing PPDU transmitted and/or received by the STA and a type of sensing field used to realize sensing in the sensing PPDU are not defined in the relevant standards, thereby resulting in large uncertainty in the degree of interference between the STAs.

SUMMARY

Embodiments of the present disclosure provide an information indication method and apparatus, a communication device, a chip, a computer readable storage medium, a computer program product, and a computer program.
The information indication method provided by the embodiments of the present disclosure includes the following operation.
The first STA transmits at least one piece of the first information, the second information or the third information to one or more second STAs. The first information is configured to indicate a Space-time Stream index of Golay Sequence used by a sensing PPDU, the second information is configured to indicate a type of the sensing PPDU, and the third information is configured to indicate a type of a sensing field used by the sensing PPDU.
The information indication method provided by the embodiments of the present disclosure includes the following operation.
The second STA receives at least one piece of the first information, the second information or the third information transmitted by the first STA. The first information is configured to indicate a Space-time Stream index of Golay Sequence used by a sensing PPDU, the second information is configured to indicate a type of the sensing PPDU, and the third information is configured to indicate a type of a sensing field used by the sensing PPDU.
The information indication apparatus provided by the embodiments of the present disclosure is applied to the first STA. The apparatus includes a transmitting unit.
The transmitting unit is configured to transmit at least one piece of the first information, the second information or the third information to one or more second STAs. The first information is configured to indicate a Space-time Stream index of Golay Sequence used by a sensing PPDU, the second information is configured to indicate a type of the sensing PPDU, and the third information is configured to indicate a type of a sensing field used by the sensing PPDU.
The information indication apparatus provided by the embodiments of the present disclosure is applied to the second STA. The apparatus includes a receiving unit.
The receiving unit is configured to receive at least one piece of the first information, the second information or the third information transmitted by the first STA. The first information is configured to indicate a Space-time Stream index of Golay Sequence used by a sensing PPDU, the second information is configured to indicate a type of the sensing PPDU, and the third information is configured to indicate a type of a sensing field used by the sensing PPDU.
The communication device provided by the embodiments of the present disclosure includes a processor and a memory. The memory is configured to store a computer program, and the processor is configured to invoke and execute the computer program stored in the memory to perform the above information indication method.
The chip provided by the embodiments of the present disclosure is used for implementing the above information indication method. Specifically, the chip includes a processor for invoking and executing a computer program from a memory to cause a device on which the chip is mounted to perform the above information indication method.
The computer readable storage medium provided by the embodiments of the present disclosure is used for storing a computer program that causes a computer to perform the above information indication method.
The computer program product provided by the embodiments of the present disclosure includes computer program instructions that cause a computer to perform the above information indication method.
The computer program provided by the embodiments of the present disclosure causes the computer to perform the above information indication method when it is executed on the computer.
In the technical solutions of the embodiments of the present disclosure, on the one hand, the first STA indicates the Space-time Stream index of the Golay Sequence used by the sensing PPDU to the second STA through the first information, so that the second STA can transmit the sensing PPDU for which the Golay Sequence has the specified Space-time Stream index, and thus mutual interference between STAs in the sensing communication can be reduced. On the other hand, the first STA indicates the type of the sensing PPDU to the second STA through the second information and/or indicates the type of the sensing field used by the sensing PPDU to the second STA through the third information, so that the second STA can transmit the specified type of sensing PPDU and/or transmit the sensing PPDU with the specified type of sensing field, thus large uncertainty in the degree of interference between STAs can be avoided.

BRIEF DESCRIPTION OF THE DRAWINGS

The accompanying drawings described herein are intended to provide a further understanding of the present disclosure, and constitute a part of the present disclosure. The schematic embodiments of the present disclosure and the description thereof are intended to explain the present disclosure, and do not constitute an undue limitation of the present disclosure.

FIG. 1 is an architecture diagram of a communication system to which the embodiments of the present disclosure is applied.
FIG. 2 is a schematic diagram of a millimeter wave sensing type.
FIG. 3 is a millimeter wave sensing flowchart.
FIG. 4(a) is a flowchart of a Coordinated Monostatic sensing Measurement instance in a sequential mode.
FIG. 4(b) is a flowchart of a Coordinated Monostatic sensing Measurement instance a in a parallel mode.
FIG. 5 is a schematic diagram of a frame format of a Directional multi-gigabit (DMG) Sensing Measurement Setup element.
FIG. 6 is a schematic diagram of a format of a TDD Beamforming frame.
FIG. 7 is a schematic diagram of a format of a DMG Sensing Request frame.
FIG. 8 is a schematic diagram of a format of a DMG Sensing Response frame.
FIG. 9 is a schematic diagram of a format of a DMG Sensing Poll frame.

FIG. 10 is autocorrelation and cross-correlation simulation results diagram of $Ga_{512}^{i}$.
FIG. 11 is a flowchart of an information indication method provided by an embodiment of the present disclosure.
FIG. 12 is the first schematic diagram of a format of an Extended Configuration Subelement frame provided by an embodiment of the present disclosure.
FIG. 13 is the second schematic diagram of a format of an Extended Configuration Subelement frame provided by an embodiment of the present disclosure.
FIG. 14 is the first schematic diagram of a format of a DMG Sensing Request frame provided by an embodiment of the present disclosure.
FIG. 15-1 is the second schematic diagram of a format of a DMG Sensing Request frame provided by an embodiment of the present disclosure.
FIG. 15-2 is the third schematic diagram of a format of a DMG Sensing Request frame provided by an embodiment of the present disclosure.
FIG. 16 is the fourth schematic diagram of a format of a DMG Sensing Request frame provided by an embodiment of the present disclosure.
FIG. 17-1 is the fifth schematic diagram of a format of a DMG Sensing Request frame provided by an embodiment of the present disclosure.
FIG. 17-2 is the sixth schematic diagram of a format of a DMG Sensing Request frame provided by an embodiment of the present disclosure.
FIG. 18 is a scene diagram of Coordinated Monostatic Sensing in a parallel mode provided by an embodiment of the present disclosure.
FIG. 19-1 is a schematic diagram of an interference situation when the enhanced DMG (EDMG) STA 1 uses a Golay Sequence with a Space-time Stream index of 1 provided by an embodiment of the present disclosure.
FIG. 19-2 is a schematic diagram of an interference situation caused by Low-density Parity-check block (LDPC BLK) when the EDMG STA 1 uses a Golay Sequence with a Space-time Stream index of 1 provided by an embodiment of the present disclosure.
FIG. 20-1 is a schematic diagram of an interference situation when the EDMG STA 1 uses a Golay Sequence with a Space-time Stream index of 2 provided by an embodiment of the present disclosure.
FIG. 20-2 is a schematic diagram of an interference situation caused by LDPC BLK when the EDMG STA 1 uses a Golay Sequence with a Space-time Stream index of 2 provided by an embodiment of the present disclosure.
FIG. 21 is the first schematic diagram of an information indication apparatus provided by an embodiment of the present disclosure.

FIG. 22 is the second schematic diagram of an information indication apparatus provided by an embodiment of the present disclosure.

FIG. 23 is a schematic structural diagram of a communication device provided by an embodiment of the present disclosure.

FIG. 24 is a schematic structural diagram of a chip provided by an embodiment of the present disclosure.

FIG. 25 is a schematic block diagram of a communication system provided by an embodiment of the present disclosure.

DETAILED DESCRIPTION

Hereinafter, the technical solutions in the embodiments of the present disclosure will be described with reference to the accompanying drawings in the embodiments of the present disclosure. It is apparent that the described embodiments are part of the embodiments of the present disclosure, but not all of the embodiments. Based on the embodiments in the present disclosure, all other embodiments obtained by those skilled in the art without creative work fall within the scope of protection of the present disclosure.

The technical solutions of the embodiments of the present disclosure may be applied to various communication systems, such as Wireless Local Area Networks (WLAN), Wireless Fidelity (WiFi), other communication systems, and the like. The bands supported by the WLAN may include, but are not limited to, a low band (2.4 GHz, 5 GHz, 6 GHz) and a high band (60 GHz).

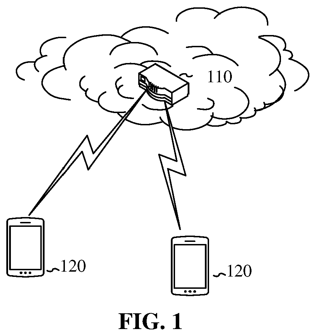

FIG. 1 is an example of a communication system architecture to which an embodiment of the present disclosure is applied.

As illustrated in FIG. 1, the communication system 100 may include an Access Point (AP) 110, and STAs 120 that are accessed to a network through the AP 110. In some scenarios, the AP 110 may be referred to as an AP STA, that is, in a sense, the AP 110 is also a STA. In some scenarios, the STA 120 may be referred to as a non-AP STA. In some scenarios, the STAs 120 may include an AP STA and a non-AP STA. The communication in the communication system 100 may include the communication between the AP 110 and the STAs 120, or the communication between the STA 120 and the STA 120, or the communication between the STA 120 and a peer STA. The peer STA may refer to a device communicating with a peer of the STA 120, for example, the peer STA may be an AP or a non-AP STA.

The AP 110 may serve as a bridge connecting a wired network and a wireless network, and its main function is to connect various wireless network clients together, and then connect the wireless network to Ethernet. The AP 110 may be a terminal device with a WiFi chip (such as a mobile phone) or a network device (such as a router).

It should be noted that the role of the STA 120 in the communication system is not absolute, that is, the role of the STA 120 in the communication system may be switched between the AP and the STA. For example, in some scenarios, when the mobile phone is connected to the router, the mobile phone is an STA, and when the mobile phone provides a hotspot for other mobile phones, the mobile phone acts as an AP.

In some embodiments, the AP 110 and the STAs 120 may be devices applied in the Internet of Vehicles, internet of things (IoT) nodes, sensors, etc. in the IoT, smart cameras, smart remote controllers, smart water meters, etc. in smart homes, and sensors, etc. in smart cities.

In some embodiments, the AP 110 may be a device supporting the 802.11be standard. The AP may be a device supporting various current and future 802.11 family WLAN standards such as 802.11ax, 802.11ac, 802.11n, 802.11g, 802.11b, and 802.11a, etc. In some embodiments, the STAs 120 may support the 802.11be standard. The STA may also support various current and future 802.11 family WLAN standards such as 802.11ax, 802.11ac, 802.11n, 802.11g, 802.11b, and 802.11a, etc.

In some embodiments, the AP 110 and/or the STAs 120 may be deployed on land, (for example, indoor or outdoor, handheld, wearable, or vehicle-mounted). The AP 110 and/or the STAs 120 may also be deployed on the water (for example, on a ship). The AP 110 and/or the STAs 120 may also be deployed in the air (for example, on aircraft, balloons and satellites, etc.).

In some embodiments, the STA 120 may be a Mobile Phone supporting WLAN/WiFi technology, a tablet (Pad), a computer with wireless transceiver function, a Virtual Reality (VR) device, an Augmented Reality (AR) device, a wireless device in industrial control, set-top boxes, a wireless device in self-driving, a vehicle-mounted communication device, a wireless device in remote medical, a wireless device in smart grid, a wireless device in transportation safety, a wireless device in smart city or smart home, a vehicle-mounted communication device, a wireless communication chips/an application specific integrated circuit (ASIC)/ a System on Chip (SoC), etc.

Exemplarily, the STA 120 may also be a wearable device. The wearable device may also be referred to as a wearable smart device, which is the general name of wearable devices developed by applying wearable technology to intelligently design daily wear, such as glasses, gloves, watches, clothing and shoes. The wearable device is a portable device that is worn directly on the body or integrated into the clothes or accessories of the user. The wearable device is not only a kind of hardware device, but also realizes powerful functions through software support, data interaction and cloud interaction. Generalized wearable smart devices have features of full functions, large size and realizing complete or partial functions without relying on smart phones, such as a smart watch or smart glasses, and a device that only focuses on a certain type of application functions and needs to be used in cooperation with other devices such as smart phones, for example, various smart bracelets, smart jewelries, etc. which may detect physical signs.

It should be understood that FIG. 1 is merely an example of the present disclosure and should not be construed as a limitation of the present disclosure. For example, FIG. 1 illustrates only one AP and two STAs by way of example, and in some embodiments, the communication system 100 may include multiple Aps and other numbers of STAs, which are not limited by the embodiments of the present disclosure.

It should be noted that FIG. 1 only illustrates a system to which the present disclosure is applied in the form of an example, and of course, the methods in the embodiments of the present disclosure may also be applied to other systems. Furthermore, the terms "system" and "network" are often used interchangeably in the present disclosure. In the present disclosure, the term "and/or" is merely used for describing an association relationship of associated objects, which indicates that there may be three relationships. For example, A and/or B may represent that there are three situations: A exists alone, A and B exist simultaneously, or B exists alone. In addition, the character "/" in the present disclosure generally indicates that there is a "or" relationship between the associated objects. It should also be understood that the "indication" mentioned in the embodiments of the present disclosure may be a direct indication, an indirect indication, or represent an associated relationship. For example, A indicates B, which may mean that A directly indicates B, for example, B can be acquired by A. It may also mean that A indicates B indirectly, for example, A indicates C, and B can be acquired through C. It may also represent that there is an association relationship between A and B. It should also be understood that the term "correspondence" mentioned in the embodiments of the present disclosure may represent that there is a direct correspondence or indirect correspondence between the two objects, may represent that there is an associated relationship between the two objects, or may represent a relationship between indicating and being instructed, configuring and being configured, or the like. It should also be understood that the "predefined" or "predefined rule" mentioned in the embodiments of the present disclosure may be realized by storing corresponding codes, tables, or other methods that can be used to indicate relevant information in advance in devices (including, for example, the terminal device and the network device), and specific implementations are not limited in the present disclosure. For example, "predefined" may refer to "defined" in the protocol. It should also be understood that in the embodiments of the present application, the term "protocol" may refer to a standard protocol in the field of communication.

In order to facilitate understanding of the technical solutions of the embodiments of the present disclosure, the related technologies of the embodiments of the present disclosure will be described below, and the related technologies below may be arbitrarily combined with the technical solutions of the embodiments of the present disclosure as options, and all of them belong to the scope of protection of the embodiments of the present disclosure.

Millimeter Wave Sensing type

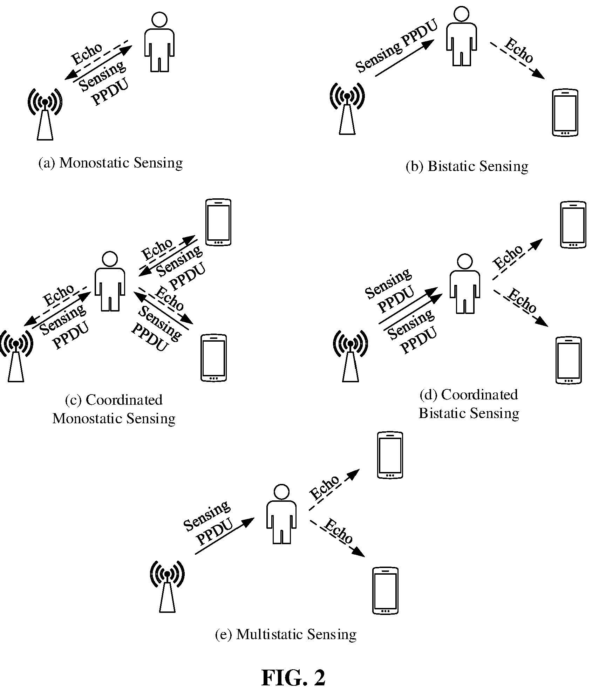

FIG. 2 illustrates five types of millimeter wave sensing. The (a) in FIG. 2 illustrates Monostatic Sensing. There is only one device participating in the sensing. The environment is sensed through the spontaneously sensing PPDU and the self-received reflection (Echo) signal, which is similar to the traditional working manner of radar. The (b) in FIG. 2 illustrates Bistatic Sensing. There are two devices participating in the sensing. One device transmits a sensing PPDU, and the other device receives the reflection signal to sense the environment. The (c) in FIG. 2 illustrates Coordinated Monostatic Sensing. There are more than one devices participating in the sensing. Each device senses the environment through the spontaneously sensing PPDU and the self-received reflection signal. There is a sensing initiator that controls all other devices to achieve collaboration. The (d) in FIG. 2 illustrates Coordinated Bistatic Sensing. There are more than two devices participating in the sensing. That is, there are at least two pairs of Bistatic Sensing devices. The sending devices respectively transmit the Sensing PPDUs, and the Sensing PPDUs are received by different receiving devices respectively, thereby realizing the coordinated sensing. The (e) in FIG. 2 illustrates Multistatic Sensing. There are more than two devices participating in the sensing. One sending device transmits the sensing PPDU, and multiple receiving devices simultaneously receive the reflection signal to simultaneously complete environmental sensing.

It should be noted that since the reflection signal is a signal generated after the Sensing PPDU is reflected by the environment, the reflection signal may also be understood as the sensing PPDU.

The transmitter of the Sensing PPDU is called the sensing transmitter, and the receiver of the sensing PPDU is called the sensing receiver.

Millimeter Wave Sensing Process

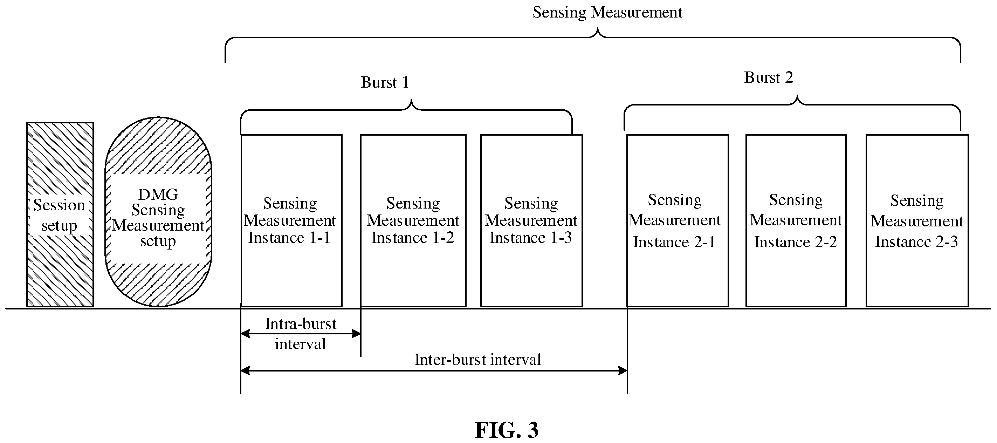

FIG. 3 illustrates the general processes of millimeter wave sensing. The processes, from left to right, are the session setup stage, the millimeter wave sensing measurement setup stage and the sensing measurement stage. The millimeter wave sensing measurement setup stage may be the Directional multi-gigabit (DMG) sensing measurement setup (DMG Measurement setup for short) stage. The sensing measurement stage is composed of multiple sensing measurement bursts, and each burst is composed of multiple sensing measurement instances. The sensing measurement instance may be a DMG Sensing Instance. The time interval between bursts is an Inter-burst interval, and the time interval between adjacent sensing measurement instances in a burst is an Intra-burst interval.

Millimeter Wave Coordinated Monostatic Sensing Measurement Instance

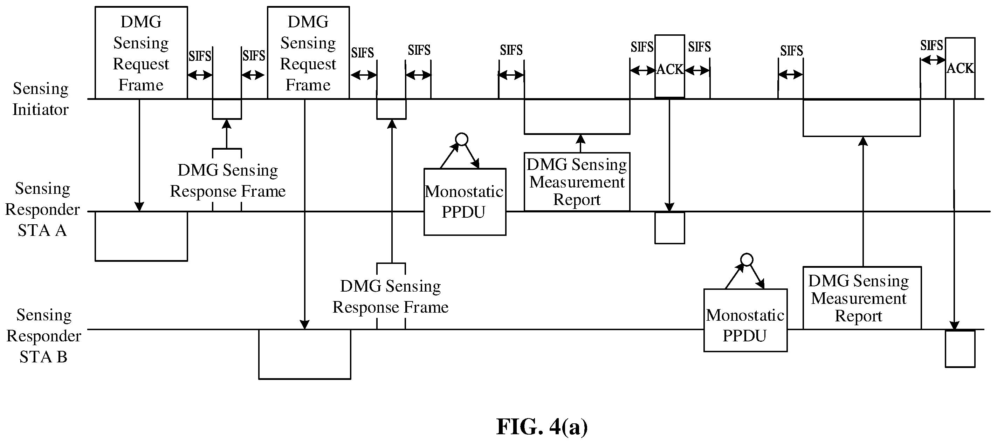

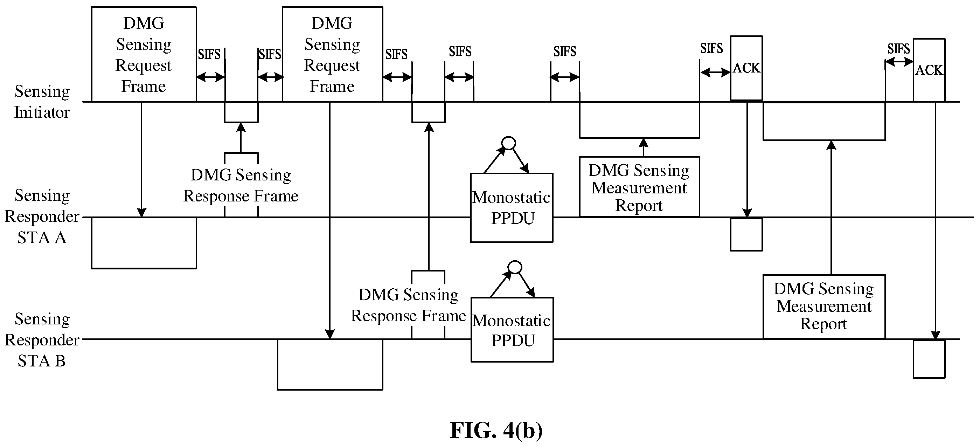

There are two modes for the millimeter wave Coordinated Monostatic Sensing Measurement Instance, one is sequential mode as illustrated in FIG. 4(a), and the other is parallel mode as illustrated in FIG. 4(b).

The similarity between the sequential mode and the parallel mode is that the sensing initiator needs to transmit DMG Sensing Request frames to each sensing responder respectively in the initial stage of the sensing measurement instance, and each sensing responder needs to reply a DMG Sensing Response frame to the sensing initiator within a Short Interframe Space (SIFS) time.

The difference between the sequential mode and the parallel mode is that in the sequential mode, multiple sensing responders sequentially transmit and receive Monostatic Sensing Measurement frames (i.e., Monostatic PPDUs) to sense the environment and transmit Sensing Measurement Report frames (i.e., DMG Sensing Measurement Report) to the sensing initiator within the SIFS time, and in the parallel mode, multiple sensing responders simultaneously transmit and receive Monostatic PPDUs to sense the environment, and then sequentially transmit Sensing Measurement Report frames (i.e., DMG Sensing Measurement Report) to the sensing initiator.

DMG Sensing Measurement Setup Element

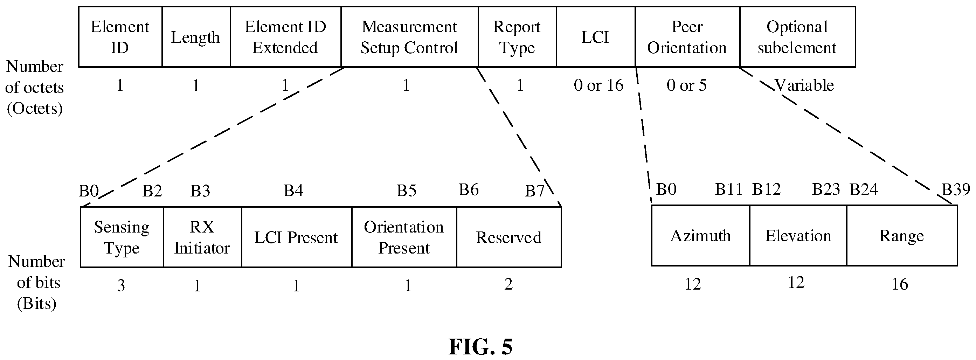

FIG. 5 illustrates the frame format of the DMG Sensing Measurement Setup element. The DMG Sensing Measurement Setup element carries information for setting the DMG Sensing Measurement. This element is located in a DMG Sensing Measurement Setup Request frame and a DMG Sensing Measurement Setup Response frame. As illustrated in FIG. 5, the DMG Sensing Measurement Setup element contains the following fields.

Element ID: indicating the ID of the DMG Sensing Measurement Setup element.

Length: indicating the number of octets in the DMG Sensing Measurement Setup element other than the Element ID field and the Length field.

Element ID Extended: indicating the extended ID of the DMG Sensing Measurement Setup element.

Measurement Setup Control: containing the following four fields.

Sensing Type: indicating the type of DMG Sensing Measurement, specific value and meaning, see Table 1.

Table 1 Sensing Type Field

| Value | Meaning |
|---|---|
| 0 | Coordinated Monostatic |
| 1 | Coordinated Bistatic |
| 2 | Bistatic |
| 3 | Multistatic |
| 4-7 | Reserved |

RX Initiator: indicating that the sensing initiator in the Bistatic Sensing type is a sensing receiver or a sensing transmitter, a value of 1 indicating that the sensing initiator is the sensing receiver, and a value of 0 indicating that the sensing initiator is the sensing transmitter.

Location configuration information (LCI) Present: indicating whether the LCI field presents in the DMG Sensing Measurement Setup element, a value of 1 indicating that it presents, and a value of 0 indicating that it does not present.

Orientation Present: indicating whether the Peer Orientation field presents in the DMG Sensing Measurement Setup element, a value of 1 indicating that it presents, and a value of 0 indicating that it does not present.

Report Type: indicating the type that the sensing initiator expects the sensing responder to report, the value and meaning can be seen in Table 2.

Table 2 Sensing Type Fields

| Value | Meaning |
|---|---|
| 0 | No Report |

(continued)

| Value | Meaning |
|-------|---------|
| 1 | Channel State Information (CSI) |
| 2 | DMG Sensing Image Direction |
| 3 | DMG Sensing Image Range-Doppler |
| 4 | DMG Sensing Image Range-Direction |
| 5 | DMG Sensing Image Doppler-Direction |
| 6 | DMG Sensing Image Range-Doppler Direction |
| 7 | Target |
| 8-255 | Reserved |

LCI: carrying the LCI field in chapter 9.4.2.21.10 (LCI report) in IEEE 802.11 REVme 1.2.

Peer Orientation: indicating the direction and distance of the peer device, including three sub-fields: Azimuth, Elevation and Range.

Optional subelement: containing zero or more subelements, all subelements and sequences being seen in Table 3.

Table 3-Optional subelements

| Subelement ID | Subelement Name | Extendibility |
|---------------|-----------------|---------------|
| 1 | TX Beam List | Yes |
| 2 | RX Beam List | Yes |
| 3 | DMG Sensing Scheduling | Yes |
| 4-255 | Reserved | No |

Time Division Duplex (TDD) Beamforming Frame

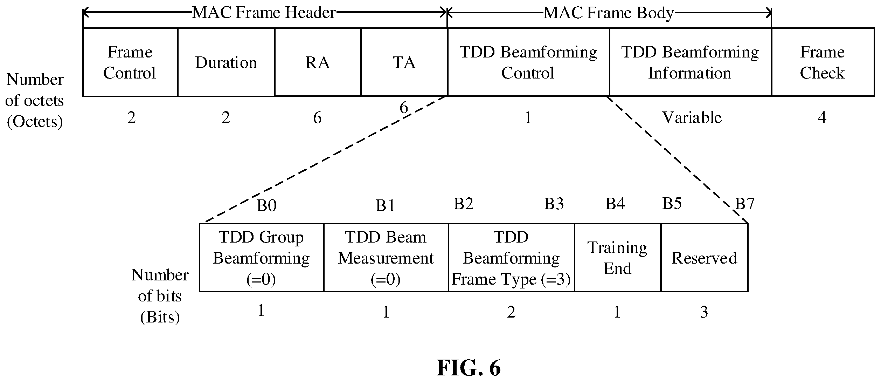

FIG. 6 is a frame format of a TDD Beamforming frame, which is a type of control frame. The TDD Beamforming frame consists of a Media Access Control (MAC) frame header, a MAC frame body, and a frame check. The MAC frame body is composed of two parts: a TDD Beamforming Control field and a TDD Beamforming Information field.

TDD Beamforming Frame Type in the TDD Beamforming Control field indicates the type of TDD Beamforming frame. The specific value and meaning can be seen in Table 4.

Table 4 TDD Beamforming Frame Types

| Value | Meaning |
|-------|---------|
| 0 | TDD Sector Sweep (SSW) |
| 1 | TDD SSW Feedback |
| 2 | TDD SSW Ack |
| 3 | DMG Sensing |

The values 0, 1, and 2 all indicate that the type of the TDD Beamforming frame is a type related to beam training. A value of 3 indicates that the type of the TDD Beamforming frame is a type related to DMG sensing.

When the value of the TDD Beamforming frame type field is 3, the TDD Group Beamforming field and the TDD Beam Measurement field jointly indicate the use of the TDD Beamforming frame in DMG sensing. The specific value and meaning can be seen in Table 5.

Table 5 Use of TDD Beamforming Frame

| Value of TDD Group Beamforming Field | Value of TDD Beam Measurement Field | Use of Frame |
|---|---|---|
| 0 | 0 | DMG Sensing Request |
| 0 | 1 | DMG Sensing Response |
| 1 | 0 | DMG Sensing Poll |
| 1 | 1 | Reserved |

The value of the TDD Group Beamforming field being 0 and the value of the TDD Beam Measurement field being 0 indicate that the TDD Beamforming frame is a DMG Sensing Request frame.
The value of the TDD Group Beamforming field being 0 and the value of the TDD Beam Measurement field being 1 indicate that the TDD Beamforming frame is a DMG Sensing Response frame.
The value of the TDD Group Beamforming field being 1 and the value of the TDD Beam Measurement field being 0 indicate that the TDD Beamforming frame is a DMG Sensing Poll frame.
Hereinafter, the DMG Sensing Request frame, the DMG Sensing Response frame, and the DMG Sensing Poll frame are further described.

1) DMG Sensing Request frame

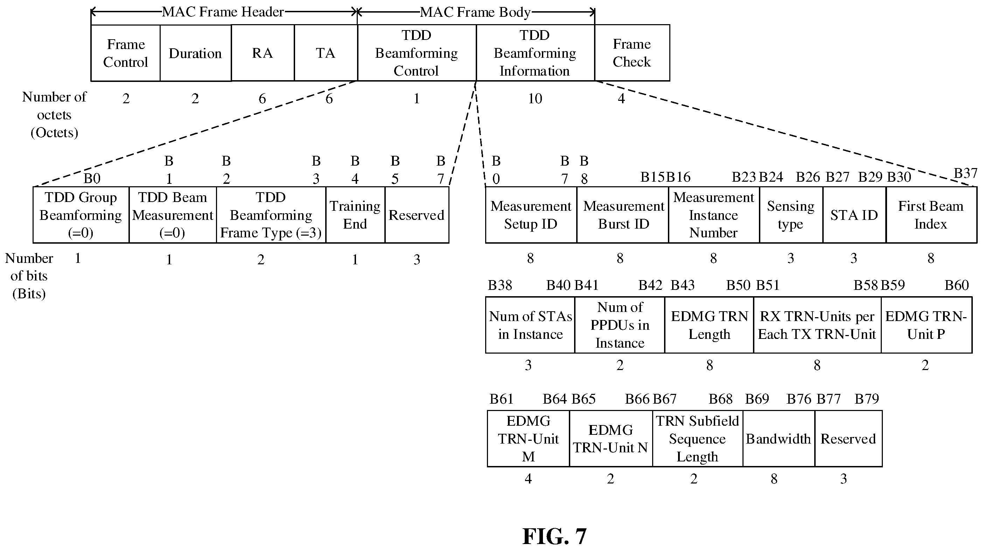

The frame format of the DMG Sensing Request frame is illustrated in FIG. 7. The TDD Beamforming Information field includes following fields.
Measurement Setup ID: indicating an identifier of the Sensing Measurement Setup associated with the frame.
Measurement Burst ID: indicating an identifier of the Sensing Measurement Burst associated with the frame.
Measurement Instance Number: indicating the sequence number of a Sensing Measurement Instance in a Measurement Burst.
Sensing type: indicating the Sensing type requested by the frame, specific value and meaning can be seen in Table 6.

Table 6 Sensing Type Field

| Value | Meaning |
|---|---|
| 0 | Coordinated Monostatic |
| 1 | Coordinated Bistatic |
| 2 | Multistatic |
| 3 | Reserved |

STA ID: indicating the order in which a certain STA participates in measurement in a sensing measurement instance.
First Beam Index: indicating an index of the transmission beam that is used firstly in a sensing measurement instance.
Num of STAs in Instance: indicating the number of STAs participating in measurement in a sensing measurement instance.
Num of PPDUs in Instance: indicating the number of PPDUs occurring in a sensing measurement instance.
EDMG TRN Length: indicating the number of training units (TRN-Units) included in a PPDU.
Number of RX TRN-Units per Each TX TRN-Unit: indicating the number of TRN-Units that are transmitted in the same direction continuously.
EDMG TRN-Unit P: indicating the number of TRN subfields for which beam direction is directed at a peer device in one TRN-Unit.
EDMG TRN-Unit M: indicating the number of TRN subfields for which beam direction is variable in one TRN-Unit.
EDMG TRN-Unit N: indicating the number of TRN subfields that are transmitted continuously by using the same beam direction among TRN-Unit-M number of TRN subfields.
TRN Subfield Sequence Length: indicating the length of the Golay Sequence used by each TRN subfield.
Bandwidth: indicating the Bandwidth used to transmit the TRN field.

8

2) DMG Sensing Response frame

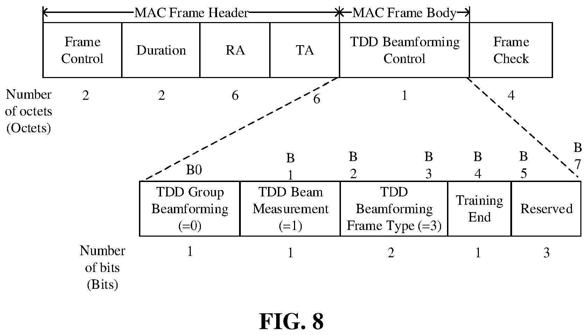

The frame format of the DMG Sensing Response frame is illustrated in FIG. 8. The MAC frame body of the DMG Sensing Response frame only includes the TDD Beamforming Control field.

3) DMG Sensing Poll frame

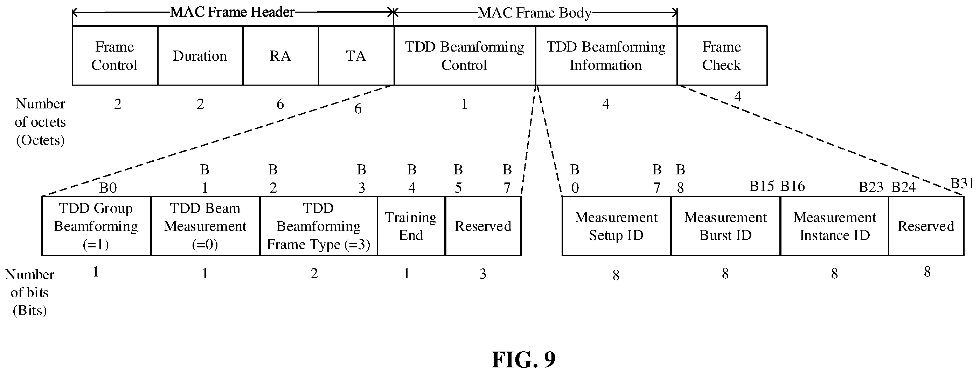

The frame format of the DMG Sensing Poll frame is illustrated in FIG. 9. The TDD Beamforming Information field includes following fields.

Measurement Setup ID: indicating an identifier of the Sensing Measurement Setup associated with the frame.

Measurement Burst ID: indicating an identifier of the Sensing Measurement Burst associated with the frame.

Measurement Instance ID: indicating an identifier of the Sensing Measurement Instance associated with the frame.

Golay Sequence

The Golay Sequence with conventional length is defined in the EDMG PHY as follows:
$$Gc_{32}^i, Gd_{32}^i, Ga_{64}^i, Gb_{64}^i, Gc_{64}^i, Gd_{64}^i, Ga_{128}^i, Gb_{128}^i, Gc_{128}^i, Gd_{128}^i,$$
$$Ga_{256}^i, Gb_{256}^i, Ga_{512}^i, Gb_{512}^i, Ga_{1024}^i, Gb_{1024}^i$$

The Golay Sequence with unconventional length is as follows:
$$Ga_{96}^i, Gb_{96}^i, Ga_{192}^i, Gb_{192}^i, Ga_{384}^i, Gb_{384}^i, Ga_{768}^i, Gb_{768}^i$$

Here, *Ga, Gb, Gc, Gd* represent the types of the Golay Sequence, the subscripts represent the length of the Golay Sequence, and the superscript i (i = 1, 2, 3,..., 8) represents the Space-time Stream index of the Golay sequence or the index of the transmission link.

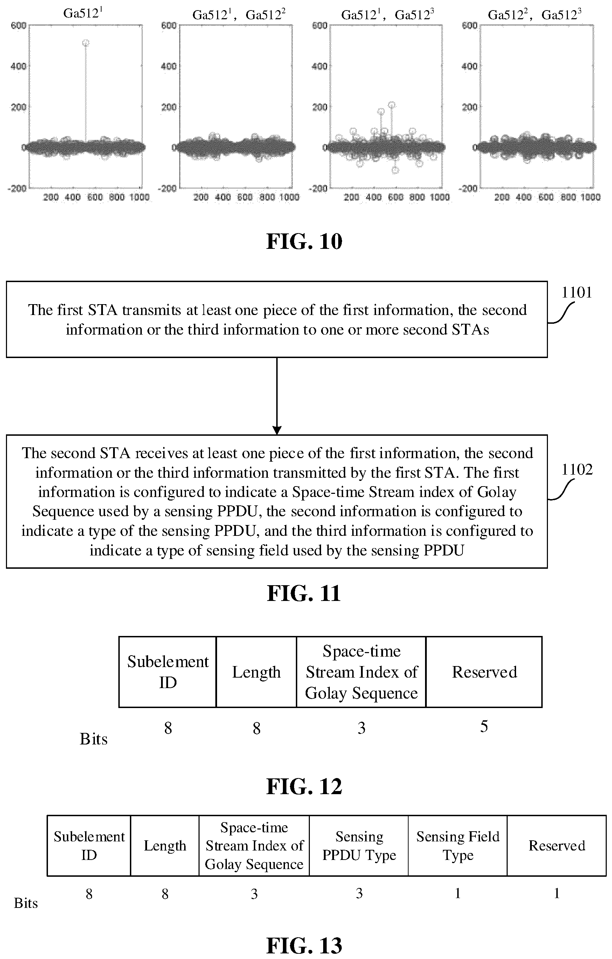

There is good autocorrelation for any one Golay Sequence, which is used for receiving symbol detection. There is good cross-correlation for the Golay Sequences with different Space-time Stream indexes but with the same length and type, which is used for reducing the interference between different Space-time Streams. FIG. 10 illustrates the simulation results of the autocorrelation and cross-correlation of $Ga_{512}^i$. The abscissa represents the displacement between two sequences (i.e., bit displacement), and the ordinate represents the cross-correlation operation result (i.e., cross-correlation value) between two sequences. The cross-correlation operation result is used as an index to measure the degree of interference. The greater the cross-correlation value is, the greater the degree of interference is, and the less the cross-correlation value is, the less the degree of interference is. FIG. 10 illustrates from left to right the simulation result of the autocorrelation of $Ga_{512}^1$ (i.e., the cross-correlation operation result between $Ga_{512}^1$ and $Ga_{512}^1$), the simulation results of the cross-correlation of $Ga_{512}^1$ and $Ga_{512}^2$ (i.e., the cross-correlation operation result between $Ga_{512}^1$ and $Ga_{512}^2$), the simulation result of the cross-correlation of $Ga_{512}^1$ and $Ga_{512}^3$ (i.e., the cross-correlation operation result between $Ga_{512}^1$ and $Ga_{512}^3$), and the simulation result of the cross-correlation of $Ga_{512}^2$ and $Ga_{512}^3$ (i.e., the cross-correlation operation result between $Ga_{512}^2$ and $Ga_{512}^3$). It can be seen that there is a sharp autocorrelation peak in the simulation result of autocorrelation of $Ga_{512}^1$, while there are almost no prominent peaks in the simulation results of the cross-correlations among $Ga_{512}^1, Ga_{512}^2, Ga_{512}^3$.

DMG/EDMG PPDU Format

A DMG control mode PPDU and a DMG single carrier mode PPDU (DMG SC mode PPDU) are defined in the DMG PHY, their formats and types of the contained Golay Sequences are illustrated in Table 7 and Table 8, respectively.

Table 7 DMG control mode PPDU format

| DMG control mode PPDU format | | | | | | |
|---|---|---|---|---|---|---|
| Fields | STF | LTF | Header | Data | AGC | TRN |
| Contained Golay Sequences | $Ga_{128}$ $Gb_{128}$ | $Ga_{128}$ $Gb_{128}$ | $Ga_{32}$ | $Ga_{32}$ | $Ga_{64}$ $Gb_{64}$ | $Ga_{128}$ $Gb_{128}$ |

Table 8 DMG SC mode PPDU format

| DMG SC mode PPDU format | | | | | | |
|---|---|---|---|---|---|---|
| Fields | STF | LTF | Header | Data | AGC | TRN |
| Contained Golay Sequences | $Ga_{128}$ $Gb_{128}$ | $Ga_{128}$ $Gb_{128}$ | $Ga_{64}$ GI LDPC BLK | $Ga_{64}$GI LDPC BLK | $Ga_{64}$ $Gb_{64}$ | $Ga_{128}$ $Gb_{128}$ |

EDMG control mode PPDU and EDMG SC mode PPDU are defined in EDMG PHY, and their formats and the types of contained Golay Sequences are illustrated in Table 9 and Table 10 respectively.

Table 9 EDMG control mode PPDU format

| EDMG control mode PPDU format | | | | | | |
|---|---|---|---|---|---|---|
| Fields | L-STF | L-LTF | L-Header | EDMG-Header-A | Data | TRN |
| Contained Golay Sequences | $Ga_{128}$ $Gb_{128}$ | $Ga_{128}$ $Gb_{128}$ | $Ga_{32}$ | $Ga_{32}$ | $Ga_{32}$ | $Ga_{TRN\_BL}$ $Gb_{TRN\_BL}$ |

Table 10 EDMG SC mode PPDU format

| EDMG SC mode PPDU format | | | | | | | | | |
|---|---|---|---|---|---|---|---|---|---|
| Fields | L-ST F | L-LT F | L-H-eader | EDM G-He-ader-A | EDMG-S TF | EDMG-C EF | EDMG-Header-B | Dat -a | TRN |
| Conta -ined Golay Se-quences | $Ga_{128}$ $Gb_{128}$ | $Ga_{128}$ $Gb_{128}$ | $Ga_{64}$ GI LDP CB LK | $Ga_{64}$ GI LDP CBL K | $Ga_{128\times}$-$_{NCB}$ | $Ga_{128\times}$-$_{NCB}$ $Gb_{128\times}$-$_{NCB}$ | $Ga/Gc_{32\times N_{CB}}$ Short GI $Ga_{64\times N_{CB}}$ Normal GI $Ga_{128\times N_{CB}}$ Long GI LDPC BLK | | $Ga_{TRN\_BL\times}$-$_{NCB}$ $Gb_{TRN\_BL\times}$-$_{NCB}$ |

Here, LDPC BLK represents the LDPC coding block, GI represents guard interval, $N_{CB}$ represents the number of consecutively occupied 2.16 GHz channels, and *TRN_BL* represents the length of the TRN subfield indicated by the TRN Subfield Sequence Length field in the EDMG-Header-A.

If the EDMG SC mode PPDU transmits one Space-time Stream only on one 2.16 GHz channel, the EDMG-STF field and EDMG-CEF field will not exist. If the EDMG SC mode PPDU is used only for SU transmission, the EDMG-Header-B field will not exist.

In the sensing communication, a device participating in the sensing transmits and/or receives a sensing PPDU, thereby realizing sensing measurement. However, when multiple STAs simultaneously transmit and/or receive the sensing PPDU, there may be mutual interference between the STAs, and finally, the accuracy of the sensing measurement is affected. Taking the Coordinated Monostatic sensing measurement instance as an example, as illustrated in FIG. 4(b), in the parallel mode, the sensing responder STA A and the sensing responder STA B will simultaneously self-transmit and self-receive Monostatic PPDUs to realize the parallel sensing measurement. However, in this mode, one STA will also receive Monostatic PPDU transmitted by other STA, so there will be mutual interference between STAs, and finally, the accuracy of the sensing measurement is affected.

Further, the type of the sensing PPDU transmitted and/or received by the STA and the type of sensing field used to realize sensing in the sensing PPDU are not defined in the relevant standards, thereby resulting in large uncertainty in the degree of interference between the STAs. Taking the Coordinated Monostatic sensing measurement instance as an example, the type/format of Monostatic PPDU used in the Coordinated Monostatic sensing type has not been defined in relevant standards at present, so different sensing responders may transmit different types/formats of Monostatic PPDUs, that is to say, a TRN (Training) field or Channel Estimation Filter (CEF) field that is used for sensing transmitted by a sensing responder may be interfered by any one field transmitted by other sensing responder, thereby resulting in randomness and uncertainty in the degree of interference.

In order to solve at least one of the above problems, the following technical solution according to the embodiment of the present disclosure is proposed, which can effectively solve the interference problem between STAs in the sensing communication, for example, the interference problem in the Coordinated Monostatic sensing measurement in the parallel mode.

It should be noted that the "first STA" in the embodiments of the present disclosure may be, but is not limited to, a sensing initiator, and the "second STA" in embodiments of the present disclosure may be, but is not limited to, a sensing responder.

It should be noted that the "sensing PPDU" in the embodiments of the present disclosure may have different names according to the sensing types, for example, for Coordinated Monostatic sensing, the sensing PPDU is a Monostatic PPDU.

It should be noted that the "Space-time Stream index" in the embodiments of the present disclosure may also be referred to as a "link index for transmitting or receiving".

FIG. 11 is a flowchart of an information indication method provided by an embodiment of the present disclosure. As illustrated in FIG. 11, the information indication method includes the following operations.

In operation 1101, the first STA transmits at least one piece of the first information, the second information or the third information to one or more second STAs. The first information is configured to indicate a Space-time Stream index of Golay Sequence used by a sensing PPDU, the second information is configured to indicate a type of the sensing PPDU, and the third information is configured to indicate a type of a sensing field used by the sensing PPDU.

In operation 1102, the second STA receives at least one piece of the first information, the second information or the third information transmitted by the first STA. The first information is configured to indicate a Space-time Stream index of Golay Sequence used by a sensing PPDU, the second information is configured to indicate a type of the sensing PPDU, and the third information is configured to indicate a type of sensing field used by the sensing PPDU.

In the embodiment of the present disclosure, the first STA transmits at least one piece of information to one or more second STAs, and the at least one piece of information includes at least one piece of the first information, the second information or the third information. The first information is configured to indicate a Space-time Stream index of Golay Sequence used by a sensing PPDU, the second information is configured to indicate a type of the sensing PPDU, and the third information is configured to indicate a type of a sensing field used by the sensing PPDU. For each second STA, the second STA receives the at least one piece of information transmitted by the first STA.

Here, the reference for the value and meaning of the Space-time Stream index of the Golay Sequence may be made to the description of the above related solutions.

Here, the type of the sensing PPDU includes at least one of: a DMG control mode PPDU, DMG SC mode PPDU, EDMG control mode PPDU or EDMG SC mode PPDU. The reference for the formats of these types of sensing PPDUs and the types of the contained Golay Sequences may be made to the description of the above related solutions.

Here, the type of the sensing field includes at least one of a TRN field or CEF field. The reference for the Golay Sequences contained in these types of sensing fields may be made to the description of the above related solutions.

In some embodiments, the Space-time Stream index of the Golay Sequence indicated by the first information transmitted by the first STA to each of the one or more second STAs may be different.

In some embodiments, the type of the sensing PPDU indicated by the second information transmitted by the first STA to each of the one or more second STAs may be the same or different.

In some embodiments, the type of the sensing field indicated by the third information transmitted by the first STA to each of the one or more second STAs may be the same or different.

In the embodiment of the present disclosure, a frame format carrying the above at least one piece of information is designed, and an implementation solutions of the frame format will be described below.

First solution

In some embodiments, in the sensing measurement setup stage, the first STA transmits a DMG Sensing Measurement Setup element to one or more second STAs. Accordingly, the second STA receives the DMG Sensing Measurement Setup element transmitted by the first STA. The DMG Sensing Measurement Setup element carries at least one piece of the first information, the second information, or the third information.

In some embodiments, the DMG Sensing Measurement Setup element includes an optional subelement field for carrying the first subelement. The first subelement carries at least one piece of the first information, the second information, or the third information.

In some embodiments, the first subelement includes at least one of the first field, the second field or the third field. The first field is configured to carry the first information, the second field is configured to carry the second information, and the third field is configured to carry the third information. Further, the first subelement further includes at least one of a subelement identification (ID) field configured to indicate an ID of the first subelement or a length field configured to indicate a length of fields in the first subelement other than the subelement ID field and the length field.

In some embodiments, the DMG Sensing Measurement Setup element is carried in a DMG Sensing Measurement Setup Request frame. Here, in the sensing measurement setup stage, the DMG Sensing Measurement Setup Request frame is transmitted by the sensing initiator, i.e., the first STA, to the sensing responder, i.e., the second STA.

In one example, the Space-time Stream index information of the Golay Sequence (i.e., the first information) may be transmitted during the sensing measurement setup stage by defining a new subelement type (i.e., the first subelement) in the optional subelement field in the DMG Sensing Measurement Setup element. The newly defined optional subelement is illustrated in Table 11. The corresponding subelement ID is 4, and the subelement name is "Extended Configuration".

Table 11 Optional subelements

| Subelement ID | Subelement Name | Extendibility |
|---|---|---|
| 1 | TX Beam List | Yes |
| 2 | RX Beam List | Yes |
| 3 | DMG Sensing Scheduling | Yes |
| 4 | Extended Configuration | Yes |
| 5-255 | Reserved | No |

Table 11 is merely an example, and the names and subelement IDs of newly defined subelements are not limited to the examples illustrated in Table 11. In the example illustrated in Table 11, the Extended Configuration subelement is used to carry the extended configuration information, and the specific frame format is illustrated in FIG. 12. The Extended Configuration subelement in FIG. 12 includes the following fields.

Suelement ID: the value being any integer in a range from 4 to 255, the value here being 4 for example only.

Length: indicating the number of octets of this element other than the subelement ID field and the Length field.

Space-time Stream Index of Golay Sequence: indicating the Space-time Stream Index of Golay Sequence used by the sensing PPDU, for example, indicating the Space-time Stream Index of Golay Sequence used by the Monostatic PPDU transmitted by the sensing responder in the Coordinated Monostatic sensing type. The specific value and meaning of the Space-time Stream Index of Golay Sequence can be seen in Table 12.

Table 12 Space-time Stream Indexes of Golay Sequence

| Value | Meaning |
|---|---|
| 0 | 1 |
| 1 | 2 |
| 2 | 3 |
| 3 | 4 |
| 4 | 5 |
| 5 | 6 |
| 6 | 7 |
| 7 | 8 |

In the above example, the field corresponding to the Space-time Stream Index of Golay Sequence is the first field. Of course, the name of the first field may also be another name. The name of the first field and the number of bits occupied by the first field are not limited in the present disclosure.

In one example, the Space-time Stream index information of the Golay Sequence (i.e., the first information), the type information of the sensing PPDU (i.e., the second information), and the type information of the sensing field (i.e., the third information) in the sensing PPDU may be transmitted during the sensing measurement setup stage by defining a new subelement type (i.e., the first sub-element) in the optional subelement field in the DMG Sensing Measurement Setup element. The newly defined optional subelement may be illustrated in Table 11 above. The corresponding subelement ID is 4, and the subelement name is "Extended Configuration". The newly defined Extended Configuration subelement is used to carry the extended configuration information. The specific frame format is illustrated in FIG. 13. The Extended Configuration subelement in FIG.13 includes the following fields.

Suelement ID: the value being any integer in a range from 4 to 255, the value here being 4 is only an example.

Length: indicating the number of octets of this element other than the subelement ID field and the Length field.

Space-time Stream Index of Golay Sequence: indicating the Space-time Stream Index of Golay Sequence used by the sensing PPDU, for example, indicating the Space-time Stream Index of Golay Sequence used by the Monostatic PPDU transmitted by the sensing responder in the Coordinated Monostatic sensing type; the specific value and meaning of the Space-time Stream Index of Golay Sequence can be seen in above Table 12.

Sensing PPDU Type: indicating the type of sensing PPDU used by the sensing responder, for example, indicating the type of Monostatic PPDU used by the sensing responder in the Coordinated Monostatic sensing type, the specific value and meaning of the Sensing PPDU Type can be seen in Table 13.

Table 13 Sensing PPDU Types

| Value | Meaning |
|-------|---------|
| 0 | DMG control mode PPDU |
| 1 | DMG SC mode PPDU |
| 2 | EDMG control mode PPDU |
| 3 | EDMG SC mode PPDU |
| 4-7 | Reserved |

Here, the DMG control mode PPDU refers to the DMG control mode PPDU format (the length of the Data field is 0) defined in the IEEE DMG PHY, and the reference for this format can be made to the description of the above related solution.

The DMG SC mode PPDU refers to the DMG SC mode PPDU format (the length of the Data field is 0) defined in IEEE DMG PHY, and the reference for this format can be made to the description of the above related solution.

The EDMG control mode PPDU refers to the EDMG control mode PPDU format (the length of the Data field is 0) defined in the IEEE EDMG PHY, and the reference for this format can be made to the description of the above related solution.

The EDMG SC mode PPDU refers to the EDMG SC mode PPDU format (the length of the Data field is 0) defined in IEEE EDMG PHY, and the reference for this format can be made to the description of the above related solution.

The Sensing Field Type indicates that the field used to sense the channel in the sensing PPDU transmitted and/or received by the sensing responder is a TRN field or a CEF field, for example, indicates that the field used to sense the channel in the Monostatic PPDU transmitted and/or received by the sensing responder in the Coordinated Monostatic sensing type is a TRN field or a CEF field. Exemplarily, a value of 1 represents the TRN field, and a value of 0 represents the CEF field.

In the above example, the field corresponding to the Space-time Stream index of Golay Sequence is the first field, the field corresponding to the type of the sensing PPDU is the second field, and the field corresponding to the type of the sensing field is the third field. Of course, the names of the first field, the second field, and the third field may also be other names. The names of the first field, the second field, and the third field and the number of occupied bits are not limited in the present disclosure.

Second solution

In some embodiments, in the sensing measurement instance stage, the first STA transmits a DMG Sensing Request frame to one or more second STAs. Accordingly, the second STA receives the DMG Sensing Request frame transmitted by the first STA. The DMG Sensing Request frame carries at least one piece of the first information, the second information or the third information.

In some embodiments, at least one piece of the first information, the second information or the third information is carried in a TDD Beamforming Information field in the DMG Sensing Request frame.

In some embodiments, the TDD Beamforming Information field includes at least one of the fourth field, the fifth field or the sixth field. The fourth field is configured to carry the first information, the fifth field is configured to carry the second information, and the sixth field is configured to carry the third information.

Here, the fourth field, the fifth field, and the sixth field are newly added fields in the TDD Beamforming Information field.

In some embodiments, the TDD Beamforming Information field includes at least one of an STA ID field, the fifth field or the sixth field. The STA ID field is configured to carry the first information, the fifth field is configured to carry the second information, and the sixth field is configured to carry the third information.

Here, the STA ID field is an existing field in the TDD Beamforming Information field, and the fifth field and the sixth field are newly added fields in the TDD Beamforming Information field.

Here, in a case where a sensing type is the first type of sensing, the STA ID field is configured to indicate an ID of a sensing responder and the Space-time Stream index of the Golay Sequence used by the sensing PPDU. In a case where a sensing type is a second type of sensing, the STA ID field is configured to indicate an index of a receiving STA synchronization subfield in the sensing PPDU. As an example, the first type of sensing is the Coordinated Monostatic sensing, and the second type of sensing is the Multistatic sensing.

Alternatively, the TDD Beamforming Information field further includes the seventh field. In a case where the sensing type is not the first type of sensing, the seventh field is reserved. In a case where the sensing type is the first type of sensing, the seventh field is configured to indicate that a mode of a Sensing Measurement Instance corresponding to the first type of sensing is a sequential mode or a parallel mode. As an example, the first type of sensing is the Coordinated Monostatic sensing.

In some embodiments, a value of a field related to a TRN in a TDD Beamforming Information field in the DMG Sensing Request frame transmitted by the first STA to each of the one or more second STAs is the same. Here, the field related to the TRN includes at least one of the following fields: an EDMG TRN Length field, the number field of RX TRN-Units of TX TRN-Unit (the RX TRN-Units per Each TX TRN-Unit field), an EDMG TRN-Unit P field, an EDMG TRN-Unit M field, an EDMG TRN-Unit N field, a TRN Subfield Sequence Length field, or a Bandwidth field.

The EDMG TRN Length field is configured to indicate the number of TRN-Units contained in one sensing PPDU.

The number field of RX TRN-Units of TX TRN-Unit (the RX TRN-Units per Each TX TRN-Unit field) is configured to indicate the number of TRN-Units that are transmitted in the same direction continuously.

EDMG TRN-Unit P field is configured to indicate the number of TRN subfields for which beam direction is directed at a peer device in one TRN-Unit.

EDMG TRN-Unit M field is configured to indicate the number of TRN subfields for which beam direction is variable in one TRN-Unit.

EDMG TRN-Unit N field is configured to indicate the number of TRN subfields that are transmitted continuously by using the same beam direction among TRN-Unit-M TRN subfields.

TRN Subfield Sequence Length field is configured to indicate a length of the Golay Sequence used by each TRN subfield.

Bandwidth field is configured to indicate a bandwidth used to transmit a TRN field.

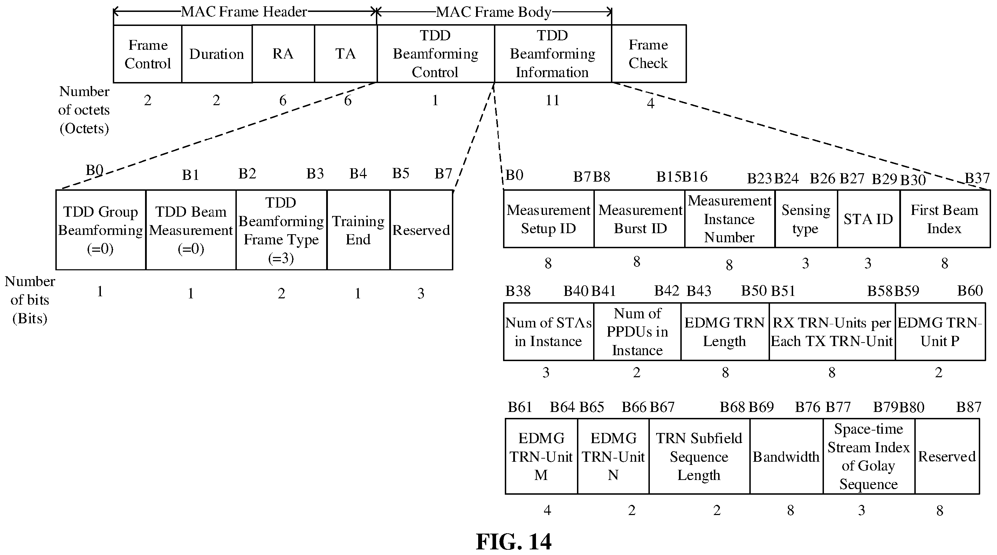

In one example, the Space-time Stream index information of Golay Sequence (i.e., the first information) may be transmitted during the sensing measurement instance stage by the DMG Sensing Request frame. Specifically, a new subfield is defined in the TDD Beamforming Information field of the DMG Sensing Request frame to transmit Space-time Stream index information of the Golay Sequence. The newly defined subfield (i.e., the fourth field) is illustrated in FIG. 14, and the corresponding field name is the Space-time Stream Index of Golay Sequence.

The Space-time Stream Index of Golay Sequence indicates the Space-time Stream Index of the Golay Sequence used by the sensing PPDU, for example, indicates the Space-time Stream Index of the Golay Sequence used by the Monostatic PPDU transmitted by the sensing responder in the Coordinated Monostatic type. The reference for specific value and meaning of the Space-time Stream Index of the Golay Sequence can be made to the above Table 12.

For the meanings of other fields in the DMG sensing Request frame illustrated in FIG. 14, the reference can be made to the description of the above related solution.

In the above example, the field corresponding to the Space-time Stream Index of the Golay Sequence is the fourth field. Of course, the name of the fourth field may be another name. The name of the fourth field and the number of bits occupied by the fourth field are not limited in the present disclosure.

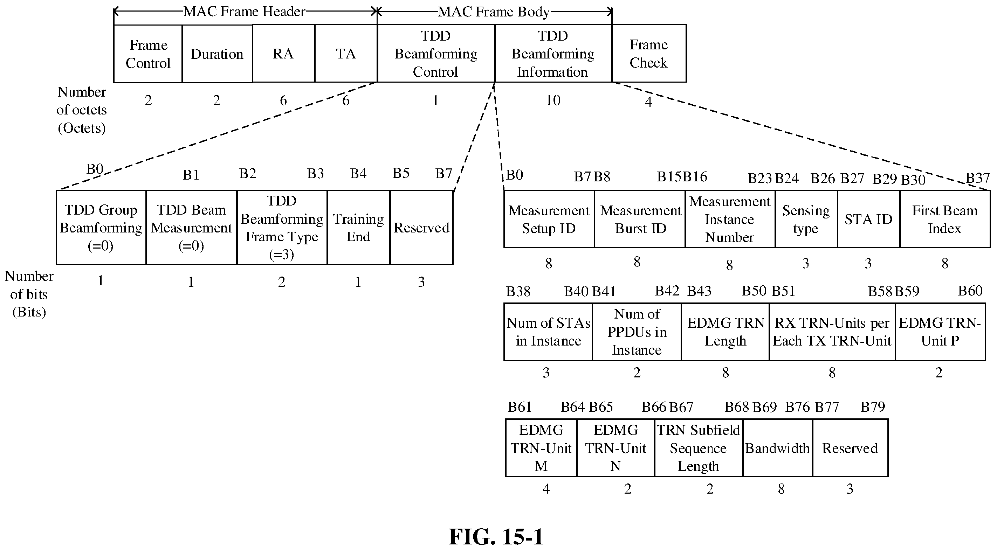

In one example, the Space-time Stream Index information of the Golay Sequence (i.e., first information) may be transmitted during the sensing measurement instance stage by the DMG Sensing Request frame. Specifically, the Space-time Stream Index information of the Golay Sequence is transmitted by multiplexing the existing STA ID field in the DMG Sensing Request frame. The STA ID field is illustrated in FIG. 15-1.

When the sensing type is the second type of sensing (for example, the Multistatic sensing), STA ID indicates an index of a receiving STA synchronization subfield in the sensing PPDU (for example, an EDMG Multistatic Sensing PPDU). When the sensing type is the first type of sensing (for example, the Coordinated Monostatic sensing), STA ID not only indicates the ID of a sensing responder, but also indicates the Space-time Stream Index of the Golay Sequence used by the sensing PPDU (for example, Monostatic PPDU) transmitted and/or received by the sensing responder. The reference for the specific value and meaning of the Space-time Stream Index of the Golay Sequence can be made to the above Table 12.

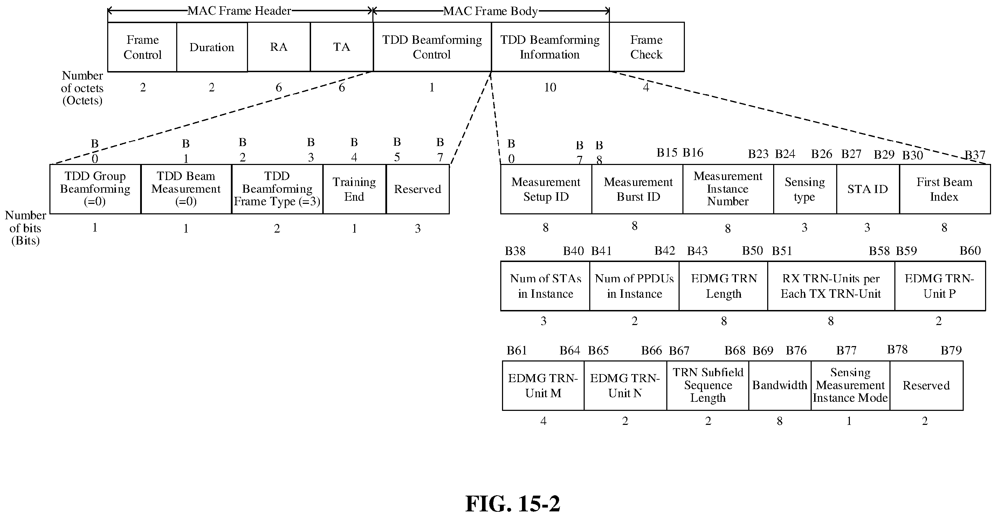

Alternatively, a Sensing Measurement Instance Mode field (i.e., the seventh field) may be added in the TDD Beamforming Information field in the DMG Sensing Request frame, as illustrated in FIG. 15-2.

When the sensing type is not the first type of sensing (for example, Coordinated Monostatic sensing), the Sensing Measurement Instance Mode field is reserved. When the sensing type is the first type of sensing (for example, Coordinated Monostatic sensing), the Sensing Measurement Instance Mode field indicates whether the mode of the sensing measurement instance of the first type of sensing is a sequential mode or a parallel mode. Exemplarily, a value of 1 indicates the sequential mode, and a value of 0 indicates the parallel mode.

For the meanings of other fields in the DMG Sensing Request frame illustrated in FIG. 15-1 and FIG. 15-2, the reference is made to the description of the above related solution.

In the above example, the field corresponding to the sensing measurement instance mode is the seventh field. Of course, the name of the seventh field may also be another name. The name of the seventh field and the number of bits occupied by the seventh field are not limited in the present disclosure. For example, the name of the seventh field may also be "Coordinated Monostatic Sequential/Parallel".

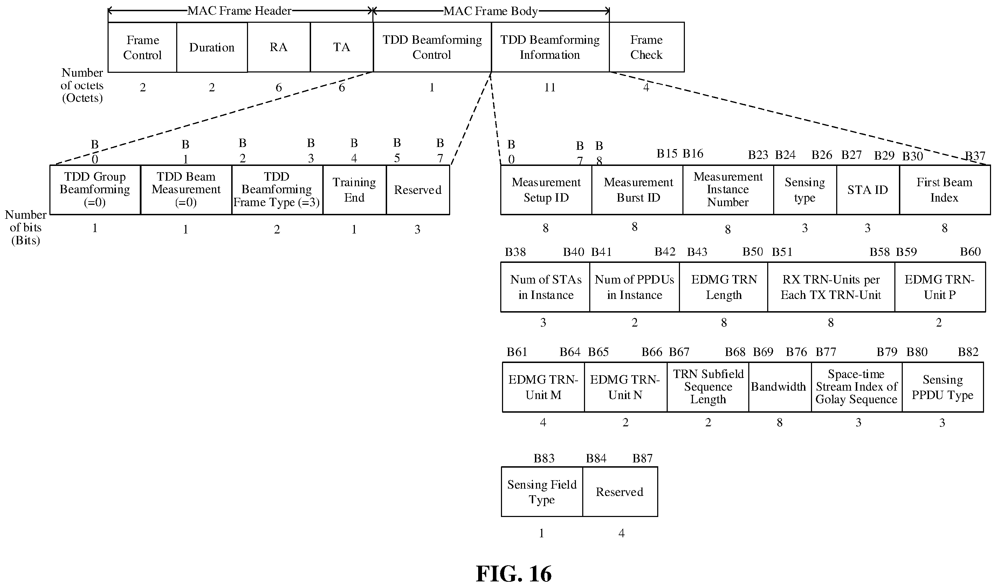

In one example, the Space-time Stream Index information of the Golay Sequence (i.e., the first information), the type information of the sensing PPDU (i.e., the second information), and the type information of the sensing field (i.e., third information) in the sensing PPDU may be transmitted during the sensing measurement instance stage through the DMG Sensing Request frame. Specifically, the Space-time Stream Index information of the Golay Sequence, the type information of the sensing PPDU and the type information of the sensing field are transmitted by defining new subfields in the TDD Beamforming Information field of the DMG Sensing Request frame. The newly defined subfields (i.e., the fourth field, the fifth field and the sixth field) are illustrated in FIG. 16, and the corresponding field names are the Space-time Stream Index of Golay Sequence, the Sensing PPDU Type, and the Sensing Field Type respectively.

Space-time Stream Index of Golay Sequence indicates the Space-time Stream Index of the Golay Sequence used by the sensing PPDU, for example, indicates the Space-time Stream Index of the Golay Sequence used by the Monostatic PPDU transmitted by the sensing responder in the Coordinated Monostatic sensing type. For specific value and meaning of the Space-time Stream Index of the Golay Sequence, the reference is made to the above Table 12.

Sensing PPDU Type indicates the type of sensing PPDU, for example, indicates the type of Monostatic PPDU used by the sensing responder in the Coordinated Monostatic sensing type. The reference for the specific value and meaning of the Sensing PPDU Type can be made to the above Table 13.

Sensing Field Type indicates that the field used to sense the channel in the sensing PPDU transmitted and/or received by the sensing responder is a TRN field or a CEF field, for example, indicates that the field used to sense the channel in the Monostatic PPDU transmitted and/or received by the sensing responder in the Coordinated Monostatic sensing type is a TRN field or a CEF field. Exemplarily, a value of 1 represents the TRN field, and a value of 0 represents the CEF field.

The reference for the meanings of other fields in the DMG Sensing Request frame illustrated in FIG. 16 can be made to the description of the above related solution. The value of the field related to the TRN in the TDD Beamforming Information field in the DMG Sensing Request frame transmitted by the first STA to each STA is the same. Here, the field related to the TRN includes at least one of the following fields: an EDMG TRN Length field, an RX TRN-Units per Each TX TRN-Unit field, an EDMG TRN-Unit P field, an EDMG TRN-Unit M field, an EDMG TRN-Unit N field, a TRN Subfield Sequence Length field, or a Bandwidth field.

In the above example, the field corresponding to the Space-time Stream Index of Golay sequence is the fourth field, the field corresponding to the type of the sensing PPDU is the fifth field, and the field corresponding to the Sensing Field Type is the sixth field. Of course, the names of the fourth field, the fifth field, and the sixth field may also be other names, and the names of the fourth field, the fifth field, and the sixth field and the number of occupied bits are not limited in the present disclosure.

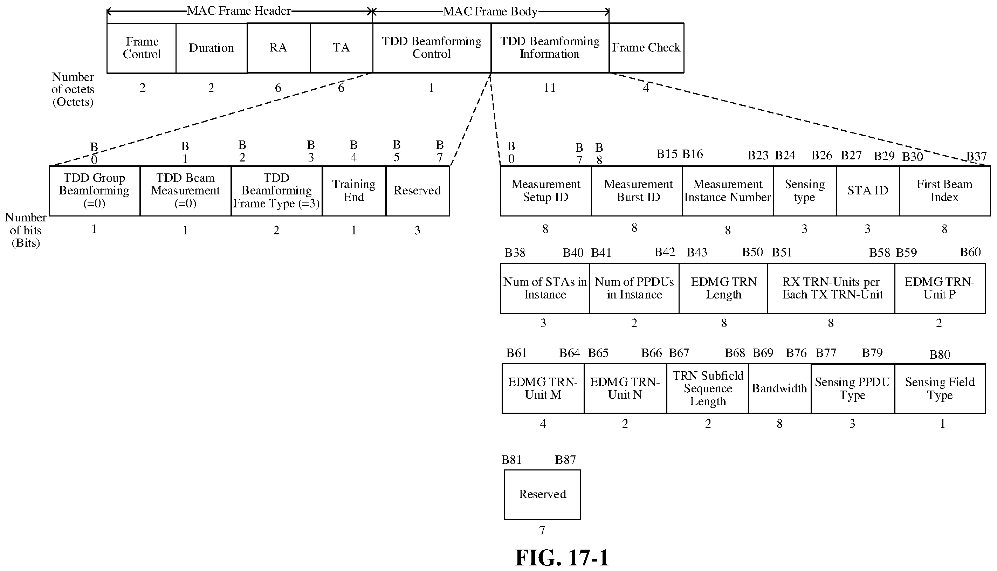

In one example, the Space-time Stream Index information of the Golay Sequence (i.e., the first information), the type information of the Sensing PPDU (i.e., the second information), and the type information of the sensing field (i.e., third information) in the sensing PPDU may be transmitted during the sensing measurement instance stage through the DMG Sensing Request frame. Specifically, the Space-time Stream Index information of the Golay Sequence is transmitted by multiplexing the existing STA ID field in the TDD Beamforming Information field in the DMG Sensing Request frame, and the type information of the Sensing PPDU and the type information of the sensing field are transmitted by defining new subfields in the TDD Beamforming Information field in the DMG Sensing Request frame. The STA ID field and the newly defined subfields (i.e., the fifth field and the sixth field) are illustrated in FIG. 17-1, and the corresponding field names are the STA ID field, the Sensing PPDU type, and the Sensing Field Type, respectively.

When the sensing type is the second type of sensing ((for example, the Multistatic sensing), STA ID indicates an index of a receiving STA synchronization subfield in the sensing PPDU (for example, an EDMG Multistatic Sensing PPDU), and when the sensing type is the first type of sensing (for example, the Coordinated Monostatic sensing), STA ID not only indicates the ID of a sensing responder, but also indicates the Space-time Stream Index of the Golay Sequence used by the sensing PPDU (for example, Monostatic PPDU) transmitted and/or received by the sensing responder. The reference for the specific value and meaning of the Space-time Stream Index of the Golay Sequence can be made to the above Table 12.

Sensing PPDU Type indicates the type of sensing PPDU, for example, indicates the type of Monostatic PPDU used by the sensing responder in the Coordinated Monostatic sensing type. The reference for the specific value and meaning of the Sensing PPDU Type can be made to the above Table 13.

Sensing Field Type indicates that the field used to sense the channel in the sensing PPDU transmitted and/or received by the sensing responder is a TRN field or a CEF field, for example, indicates that the field used to sense the channel in the Monostatic PPDU transmitted and/or received by the sensing responder in the Coordinated Monostatic sensing type is a TRN field or a CEF field. Exemplarily, a value of 1 represents the TRN field, and a value of 0 represents the CEF field.

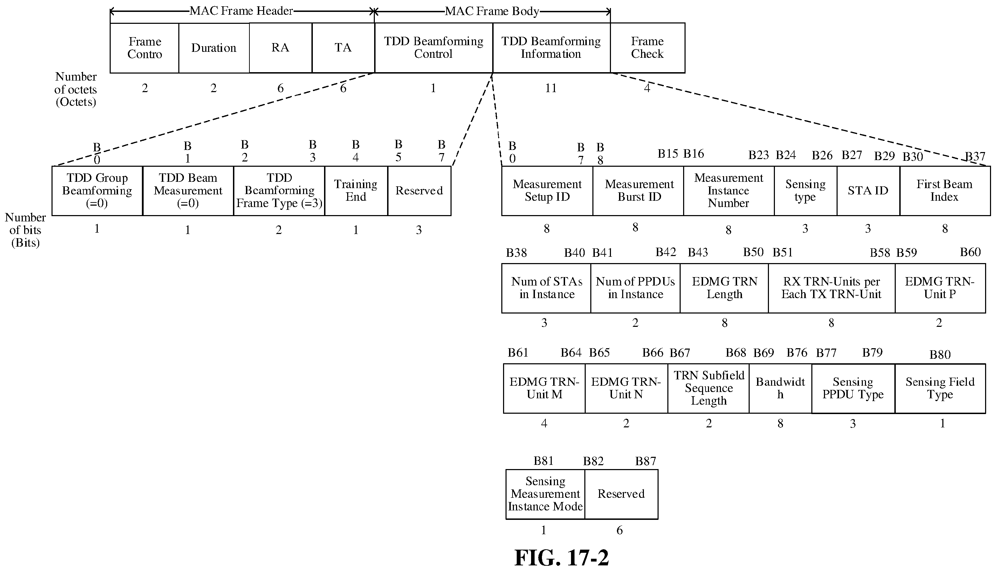

Alternatively, a Sensing Measurement Instance Mode field (i.e., the seventh field) may be added to the TDD Beamforming Information field in the DMG Sensing Request frame, as illustrated in FIG. 17-2.

When the sensing type is not the first type of sensing (for example, Coordinated Monostatic sensing), the Sensing Measurement Instance Mode field is reserved. When the sensing type is the first type of sensing (for example, Coordinated Monostatic sensing), the Sensing Measurement Instance Mode field indicates the mode of the sensing measurement instance of the first type of sensing is a sequential mode or a parallel mode. Exemplarily, a value of 1 indicates the sequential mode, and a value of 0 indicates the parallel mode.

The reference for the meanings of other fields in the DMG Sensing Request frame illustrated in FIG. 17-1 and FIG. 17-2 can be made to the description of the above related solution. The value of the field related to the TRN in the TDD Beamforming Information field in the DMG Sensing Request frame transmitted by the first STA to each STA is the same. Here, the field related to the TRN includes at least one of the following fields: an EDMG TRN Length field, an RX TRN-Units per Each TX TRN-Unit field, an EDMG TRN-Unit P field, an EDMG TRN-Unit M field, an EDMG TRN-Unit N field, a TRN Subfield Sequence Length field, or a Bandwidth field.

In the above example, the field corresponding to the type of the sensing PPDU is the fifth field, the field corresponding to the type of the sensing field is the sixth field, and the field corresponding to the sensing measurement instance mode is the seventh field. Of course, the names of the fifth field, the sixth field, and the seventh field may be other names, and the names of the fifth field, the sixth field, and the seventh field and the number of occupied bits are not limited in the present disclosure. For example, the name of the seventh field may also be "Coordinated Monostatic Sequential/Parallel".

In some embodiments, after the second STA acquires at least one piece of the first information, the second information, or the third information from the first STA, the second STA transmits and/or receives the sensing PPDU based on at least one piece of the first information, the second information, or the third information.

In the technical solutions of the embodiments of the present disclosure, on the one hand, in the sensing measurement setup stage, the first STA (for example, the sensing initiator) transmits to each second STA (for example, the sensing responder) at least one piece of the following information: Space-time Stream Index information of the Golay Sequence (also referred to as the index of the transmission link), the type information of the sensing PPDU, or the type information of the sensing field. The Space-time Stream Index information of the Golay Sequence is used to indicate the Space-time Stream Index of the Golay Sequence used by the sensing PPDU transmitted and/or received by the second STA (for example, sensing responder), and mutual interference between STAs is reduced by making different second STAs (for example, sensing responder) transmit and/or receive sensing PPDUs with the Golay Sequences having different Space-time Stream Indexes. The type information of the sensing PPDU is used to indicate the type of sensing PPDU used by the second STA (for example, sensing responder), and the type information of the sensing field is used to indicate the type of sensing field in the sensing PPDU used by the second STA (for example, sensing responder), so that different second STAs (for example, sensing responder) transmit and/or receive sensing PPDUs in a specific format, and it is guaranteed that the TRN field or CEF field for sensing transmitted by one second STA will not be interfered by any one field transmitted by other second STAs.

In order to verify the anti-interference performance of the technical solutions of the embodiments of the present disclosure, simulation results under various interference conditions are given below.

As can be seen from the above related art, the CEF field and the TRN field in the DMG PPDU and the L-CEF field in the EDMG PPDU are all composed of $Ga_{128}$ and $Gb_{128}$, while the TRN field in the EDMG PPDU is composed of $Ga_{TRN\_BL}$, $Gb_{TRN\_BL}$ or $Ga_{TRN\_BL \times N_{CB}}$, $Gb_{TRN\_BL \times N_{CB}}$. However, it is stipulated in the EDMG PHY that one EDMG STA must support Golay sequences of length 128 and 256, so the TRN field in the EDMG PPDU must support the use of $Ga_{128}$ and $Gb_{128}$. Since whether only TRN field or CEF field can be used to realize sensing in Coordinated Monostatic sensing has not been specified in existing standards, both fields can currently be used to realize sensing. In order to reduce the simulation pressure without losing generality, $Ga_{128}$ in the CEF field or TRN field is taken as an example to verify the interference caused by different fields of other PPDUs.

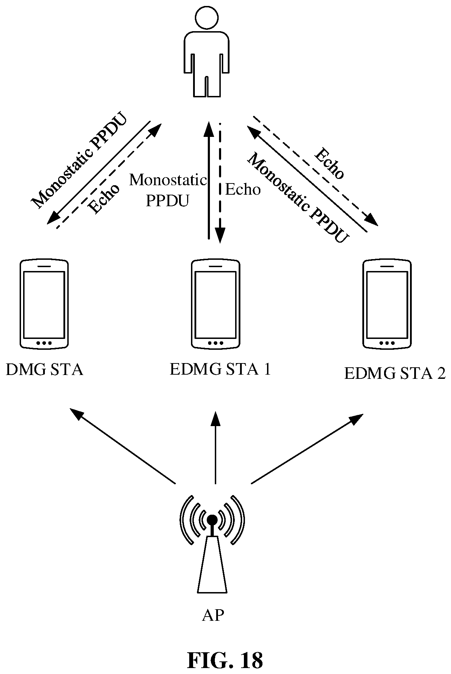

The simulation scenarios are as follows. 1) A Coordinated Monostatic sensing in the parallel mode (as illustrated in FIG.18). Herein, an AP acts as the sensing initiator and is responsible for setting and scheduling other sensing responders, and a DMG STA and two EDMG STAs (EDMG STA 1 and EDMG STA 2) act as sensing responders, and self-transmit and self-receive Monostatic PPDUs simultaneously under the scheduling of the sensing initiator. 2) The above solution of the embodiments of the present disclosure is used, the type of the Monostatic PPDU self-transmitted and self-received by each sensing responder and the type of the sensing field are not set, and only the Space-time Stream Index of the Golay Sequence used by each sensing responder is set. 3) All sensing responders only transmit the Monostatic PPDUs of a single Space-time Stream, but the indexes of the used Space-time Streams may be different, the number of 2.16 GHz channels occupied by two EDMG STAs may be different, and the formats and lengths of Monostatic PPDUs transmitted by different sensing responders may be different. 4) The fields used by different sensing responders for sensing may be the same or different. If the CEF field is used as the sensing field, different sensing responders use different beams to transmit the entire Monostatic PPDU. If the TRN field is used as the sensing field, different sensing responders use different beams to only transmit the TRN field part of the Monostatic PPDU. 5) The EDMG STA 1 thereof is taken as an observation object, and the degree of interference on the $Ga_{128}$ in CEF field or TRN field in the Monostatic PPDU self-transmitted and self-received by the EDMG STA 1 caused by Monostatic PPDUs transmitted by other sensing responders is observed. 6) The cross-correlation operation result between two sequences is taken as an index to measure the degree of interference. Strong cross-correlation indicates that there may be strong interference, and weak cross-correlation indicates that there is little interference. The LDPC BLK field is replaced with a random sequence with length 128.

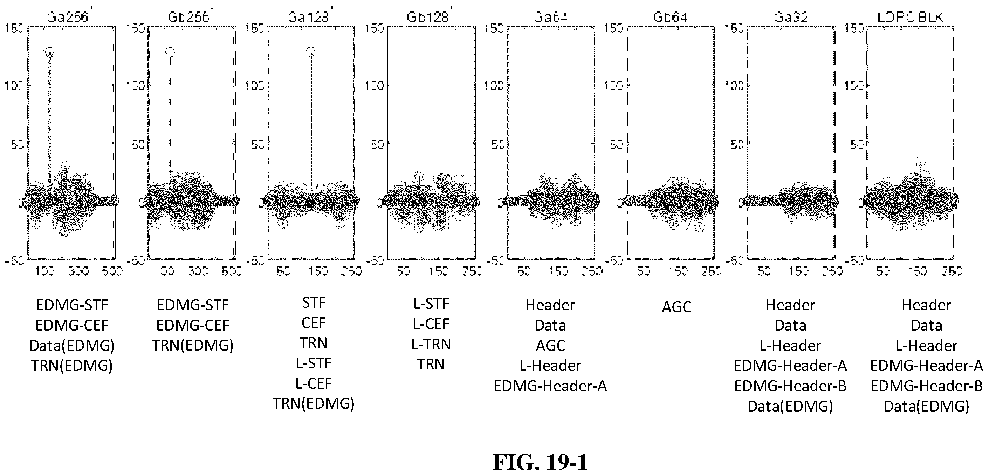

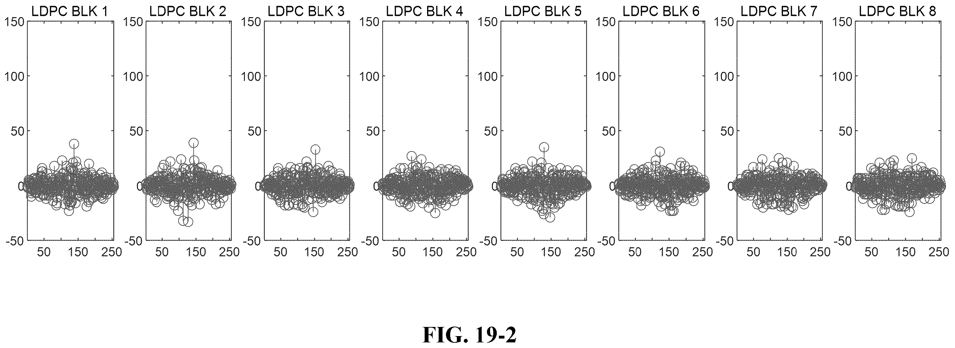

According to the current technology, both EDMG STA 1 and EDMG STA 2 use the same Golay Sequence with Space-time Stream Index 1. In this case, the possible interference on $Ga^1_{128}$ in the CEF field or TRN field of EDMG STA 1 is illustrated in FIG. 19-1 and FIG. 19-2. The abscissa represents the displacement between two sequences (i.e., bit displacement), and the ordinate represents the cross-correlation operation result (i.e., cross-correlation value) between two sequences. The cross-correlation operation result is taken as an index to measure the degree of interference. The greater the cross-correlation value is, the greater the degree of interference is, and the less the cross-correlation value is, the less the degree of interference is. FIG 19-1 illustrates the interference when EDMG STA 1 uses a Golay Sequence with a Space-time Stream Index 1 (i.e., $Ga^1_{128}$). FIG. 19-1 illustrates from left to right the following simulation results.

1-1) The simulation result of the cross-correlation between $Ga^1_{128}$ and $Ga^1_{256}$ (i.e., the cross-correlation operation result between $Ga^1_{128}$ and $Ga^1_{256}$).

Here, $Ga^1_{128}$ exists in the CEF field or the TRN field transmitted by the EDMG STA 1. $Ga^1_{256}$ exists in the EDMG-STF field, EDMG-CEF field, Data field, and TRN field transmitted by the EDMG STA 2.

1-2) The simulation result of the cross-correlation between $Ga^1_{128}$ and $Gb^1_{256}$ (i.e., the cross-correlation operation result between $Ga^1_{128}$ and $Gb^1_{256}$).

Here, $Ga^1_{128}$ exists in the CEF field or the TRN field transmitted by the EDMG STA 1. $Gb^1_{256}$ exists in the EDMG-STF field, EDMG-CEF field and TRN field transmitted by the EDMG STA 2.

1-3) The simulation result of the autocorrelation between $Ga^1_{128}$ and $Ga^1_{128}$ (i.e., the cross-correlation operation result between $Ga^1_{128}$ and $Ga^1_{128}$).

Here, the former $Ga^1_{128}$ exists in the CEF field or the TRN field transmitted by the EDMG STA 1. The latter $Ga^1_{128}$ exists in STF field, CEF field and TRN field transmitted by the DMG STA, and L-STF field, L-CEF field and TRN field transmitted by the EDMG STA 2.

1-4) The simulation result of the autocorrelation between $Ga^1_{128}$ and $Gb^1_{128}$ (i.e., the cross-correlation operation result between $Ga^1_{128}$ and $Gb^1_{128}$).

Here, $Ga^1_{128}$ exists in the CEF field or the TRN field transmitted by the EDMG STA 1. $Gb^1_{128}$ exists in the L-STF field, L-CEF field, L-TRN field and TRN field transmitted by the EDMG STA 2.

1-5) The simulation result of the cross-correlation between $Ga^1_{128}$ and $Ga_{64}$ (i.e., the cross-correlation operation result between $Ga^1_{128}$ and $Ga_{64}$).

Here, $Ga^1_{128}$ exists in the CEF field or the TRN field transmitted by the EDMG STA 1. $Ga_{64}$ exists in the Header field, Data field and AGC field transmitted by the DMG STA, and the L-Header field and EDMG-Header-A field transmitted by the EDMG STA 2.

1-6) The simulation result of the cross-correlation between $Ga^1_{128}$ and $Gb_{64}$ (i.e., the cross-correlation operation result between $Ga^1_{128}$ and $Gb_{64}$).

Here, $Ga^1_{128}$ exists in the CEF field or the TRN field transmitted by the EDMG STA 1. $Gb_{64}$ exists in the AGC field transmitted by the DMG STA.

1-7) The simulation result of the cross-correlation between $Ga^1_{128}$ and $Ga_{32}$ (i.e., the cross-correlation operation result between $Ga^1_{128}$ and $Ga_{32}$).

Here, $Ga^1_{128}$ exists in the CEF field or the TRN field transmitted by the EDMG STA 1. $Ga_{32}$ exists in the Header field and Data field transmitted by the DMG STA, and the L-Header field, EDMG-Header-A field, EDMG-Header-B field and Data field transmitted by the EDMG STA 2.

1-8) The simulation result of the cross-correlation between $Ga^1_{128}$ and LDPC BLK (i.e., the cross-correlation operation result between $Ga^1_{128}$ and LDPC BLK).

Here, $Ga^1_{128}$ exists in the CEF field or the TRN field transmitted by the EDMG STA 1. The LDPC BLK exists in the Header field and Data field transmitted by the DMG STA, and the L-Header field, EDMG-Header-A field, EDMG-Header-B field and Data field transmitted by the EDMG STA 2.

The LDPC BLK in above 1-8) may be further distinguished. FIG. 19-2 illustrates the interference caused by the LDPC BLK when the DMG STA 1 uses the Golay Sequence with the Space-time Stream Index 1 (i.e., $Ga^1_{128}$ ). FIG. 19-2 illustrates from left to right the following simulation results.

1-8.1) The simulation result of the cross-correlation between $Ga^1_{128}$ and LDPC BLK1 (i.e., the cross-correlation operation result between $Ga^1_{128}$ and LDPC BLK1).

1-8.2) The simulation result of the cross-correlation between $Ga^1_{128}$ and LDPC BLK2 (i.e., the cross-correlation operation result between $Ga^1_{128}$ and LDPC BLK2).

1-8.3) The simulation result of the cross-correlation between $Ga^1_{128}$ and LDPC BLK3 (i.e., the cross-correlation operation result between $Ga^1_{128}$ and LDPC BLK3).

1-8.4) The simulation result of the cross-correlation between $Ga^1_{128}$ and LDPC BLK4 (i.e. the cross-correlation operation result between $Ga^1_{128}$ and LDPC BLK4).

1-8.5) The simulation result of the cross-correlation between $Ga^1_{128}$ and LDPC BLK5 (i.e., the cross-correlation operation result between $Ga^1_{128}$ and LDPC BLK5).

1-8.6) The simulation result of the cross-correlation between $Ga^1_{128}$ and LDPC BLK6 (i.e., the cross-correlation operation result between $Ga^1_{128}$ and LDPC BLK6).

1-8.7) The simulation result of the cross-correlation between $Ga^1_{128}$ and LDPC BLK7 (i.e., the cross-correlation operation result between $Ga^1_{128}$ and LDPC BLK7).

1-8.8) The simulation result of the cross-correlation between $Ga^1_{128}$ and LDPC BLK8 (i.e., the cross-correlation operation result between $Ga^1_{128}$ and LDPC BLK8).

It may be seen from FIG. 19-1 and FIG. 19-2 that there are prominent peaks in the simulation result of cross-correlation between $Ga^1_{128}$ and $Ga^1_{256}$, the simulation result of the cross-correlation between $Ga^1_{128}$ and $Gb^1_{256}$, and the simulation result of the autocorrelation between $Ga^1_{128}$ and $Ga^1_{128}$. It may be seen that there is a strong cross-correlation between $Ga^1_{256}$ in the EDMG-STF field, EDMG-LTF field, Data field and TRN field transmitted by the EDMG STA 2, $Gb^1_{256}$ in the EDMG-STF field, the EDMG-LTF field and the TRN field and $Ga^1_{128}$ in the STF field, CEF field and TRN field transmitted by the DMG STA and in the L-STF field, L-CEF field and TRN field transmitted by the EDMG STA 2 with $Ga_{128}^1$ in EDMG STA 1, which may lead to strong interference. While there is weak cross-correlation between other Golay Sequences and $Ga_{128}^1$, and the caused interference is little.

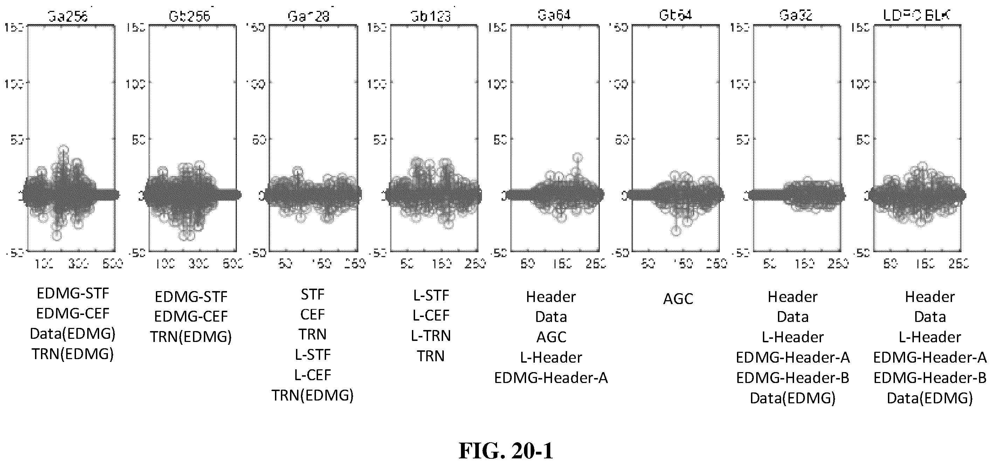

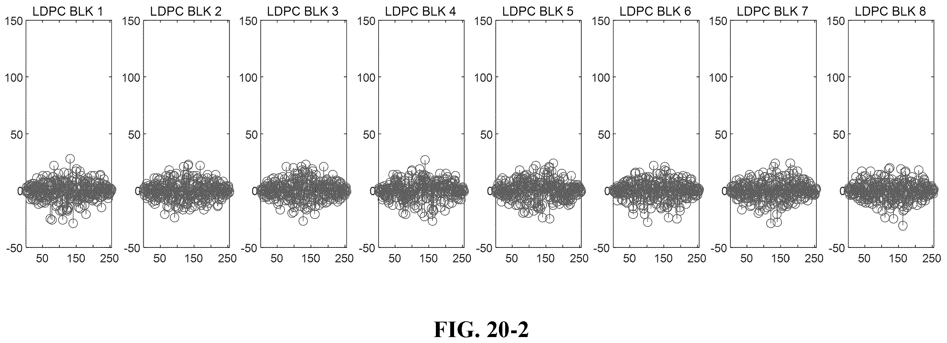

According to the technique of the present disclosure, at the sensing measurement setup stage or the sensing measurement instance stage, the sensing initiator configures different Space-time Stream Indexes for each sensing responder participating in the Coordinated Monostatic sensing measurement, so that the Golay Sequences used by the Monostatic PPDUs transmitted by different sensing responders are different. Here, the Space-time Stream Index of the Golay Sequence configured for the EDMG STA 1 is 2, and the Space-time Stream Index of the Golay Sequence configured for the EDMG STA 1 is 1. Since the multi-Space-time Stream transmission is not supported by the DMG STA, the Space-time Stream Index of the Golay Sequence cannot be configured. In this case, the possible interference on $Ga_{128}^2$ in the CEF field or the TRN field of the EDMG STA 1 is illustrated in FIG. 20-1 and FIG. 20-2. The abscissa represents the displacement between two sequences (i.e., bit displacement), and the ordinate represents the cross-correlation operation result between two sequences (i.e., cross-correlation value). The cross-correlation operation result is taken as an index to measure the degree of interference. The greater the cross-correlation value is, the greater the degree of the interference is, and the less the cross-correlation value is, the less the degree of interference is. FIG. 20-1 illustrates that the interference when the EDMG STA 1 uses the Golay Sequence with the Space-time Stream Index 2 (i.e., $Ga_{128}^2$). FIG. 20-1 illustrates from left to right the following simulation results.

2-1) The simulation result of the cross-correlation between $Ga_{128}^2$ and $Ga_{256}^1$ (i.e., the cross-correlation operation result between $Ga_{128}^2$ and $Ga_{256}^1$).

Here, $Ga_{128}^2$ exists in the CEF field or the TRN field transmitted by the EDMG STA 1. $Ga_{256}^1$ exists in the EDMG-STF field, EDMG-CEF field, Data field and TRN field transmitted by the EDMG STA 2.

2-2) The simulation result of the cross-correlation between $Ga_{128}^2$ and $Gb_{256}^1$ (i.e., the cross-correlation operation result between $Ga_{128}^2$ and $Gb_{256}^1$).

Here, $Ga_{128}^2$ exists in the CEF field or the TRN field transmitted by the EDMG STA 1. $Gb_{256}^1$ exists in the EDMG-STF field, EDMG-CEF field and TRN field transmitted by the EDMG STA 2.

2-3) The simulation result of the cross-correlation between $Ga_{128}^2$ and $Ga_{128}^1$ (i.e., the cross-correlation operation result between $Ga_{128}^2$ and $Ga_{128}^1$).

Here, $Ga_{128}^2$ exists in the CEF field or the TRN field transmitted by the EDMG STA 1. $Ga_{128}^1$ exists in STF field, CEF field and TRN field transmitted by the DMG STA and L-STF, L-CEF, TRN fields transmitted by the EDMG STA 2.

2-4) The simulation result of the autocorrelation between $Ga_{128}^2$ and $Gb_{128}^1$ (i.e., the cross-correlation operation result between $Ga_{128}^2$ and $Gb_{128}^1$).

Here, $Ga_{128}^2$ exists in the CEF field or the TRN field transmitted by the EDMG STA 1. $Gb_{128}^1$ exists in the L-STF field, L-CEF field, L-TRN field and TRN field transmitted by the EDMG STA 2.

2-5) The simulation result of the cross-correlation between $Ga_{128}^2$ and $Ga_{64}$ (i.e., the cross-correlation operation result between $Ga_{128}^2$ and $Ga_{64}$).

Here, $Ga_{128}^2$ exists in the CEF field or the TRN field transmitted by the EDMG STA 1. $Ga_{64}$ exists in the Header field, Data field and AGC field transmitted by the DMG STA and the L-Header field and EDMG-Header-A field transmitted by the EDMG STA 2.

2-6) The simulation result of the cross-correlation between $Ga_{128}^2$ and $Gb_{64}$ (i.e., the cross-correlation operation result between $Ga_{128}^2$ and $Gb_{64}$).

Here, $Ga_{128}^2$ exists in the CEF field or the TRN field transmitted by the EDMG STA 1. $Gb_{64}$ exists in the AGC field transmitted by the DMG STA.

2-7) The simulation result of the cross-correlation between $Ga_{128}^2$ and $Ga_{32}$ (i.e., the cross-correlation operation result between $Ga_{128}^2$ and $Ga_{32}$).

Here, $Ga_{128}^2$ exists in the CEF field or the TRN field transmitted by the EDMG STA 1. $Ga_{32}$ exists in the Header field and Data field transmitted by the DMG STA and the L-Header field, EDMG-Header-A field, EDMG-Header-B field and Data field transmitted by the EDMG STA 2.

2-8) The simulation result of the cross-correlation between $Ga_{128}^2$ and LDPC BLK (i.e., the cross-correlation operation result between $Ga_{128}^2$ and LDPC BLK).

Here, $Ga_{128}^2$ exists in the CEF field or the TRN field transmitted by the EDMG STA 1. The LDPC BLK exists in the Header field and Data field transmitted by the DMG STA and the L-Header field, EDMG-Header-A field, EDMG-Header-B field and Data field transmitted by the EDMG STA 2.

The LDPC BLK in above 2-8) can be further distinguished. FIG. 20-2 illustrates the interference caused by the LDPC BLK when the DMG STA 1 uses the Golay Sequence with the Space-time Stream Index 2 (i.e., $Ga_{128}^2$ ). FIG. 20-2 illustrates from left to right the following simulation results.

2-8.1) The simulation result of the cross-correlation between $Ga_{128}^2$ and LDPC BLK1 (i.e., the cross-correlation operation result between $Ga_{128}^2$ and LDPC BLK1).

2-8.2) The simulation result of the cross-correlation between $Ga_{128}^2$ and LDPC BLK2 (i.e., the cross-correlation operation result between $Ga_{128}^2$ and LDPC BLK2).

2-8.3) The simulation result of the cross-correlation between $Ga_{128}^2$ and LDPC BLK3 (i.e., the cross-correlation operation result between $Ga_{128}^2$ and LDPC BLK3).

2-8.4) The simulation result of the cross-correlation between $Ga_{128}^2$ and LDPC BLK4 (i.e., the cross-correlation operation result between $Ga_{128}^2$ and LDPC BLK4).

2-8.5) The simulation result of the cross-correlation between $Ga_{128}^2$ and LDPC BLK5 (i.e., the cross-correlation operation result between $Ga_{128}^2$ and LDPC BLK5).

2-8.6) The simulation result of the cross-correlation between $Ga_{128}^2$ and LDPC BLK6 (i.e., the cross-correlation operation result between $Ga_{128}^2$ and LDPC BLK6).

2-8.7) The simulation result of the cross-correlation between $Ga_{128}^2$ and LDPC BLK7 (i.e., the cross-correlation operation result between $Ga_{128}^2$ and LDPC BLK7).

2-8.8) The simulation result of the cross-correlation between $Ga_{128}^2$ and LDPC BLK8 (i.e., the cross-correlation operation result between $Ga_{128}^2$ and LDPC BLK8).

It may be seen from FIG. 20-1 and FIG. 20-2 that there is a weak correlation between the $Ga_{128}^2$ transmitted by the EDMG STA 1 and the Sequences in all fields transmitted by other STAs. That is, the interference on $Ga_{128}^2$ Sequence in the CEF field or TRN field of the EDMG STA 1 is little, which can alleviate the mutual interference problem in the Coordinated Monostatic sensing in the parallel mode.

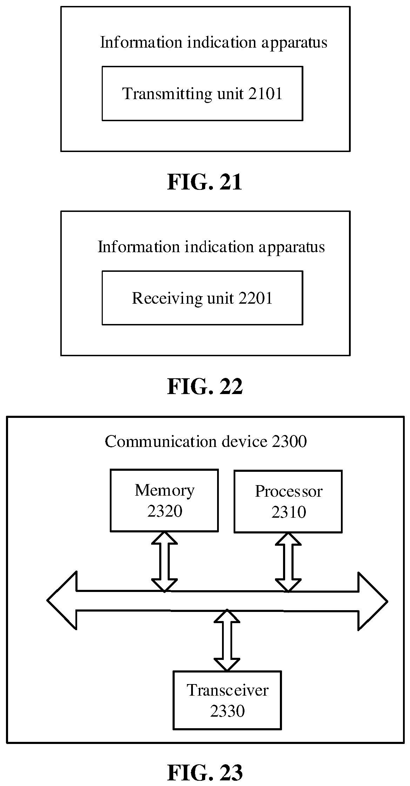

FIG. 21 is the first schematic diagram of an information indication apparatus provided by an embodiment of the present disclosure. The apparatus is applicable for the first STA. As illustrated in FIG. 21, the apparatus includes a transmitting unit 2101.

The transmitting unit 2101 is configured to transmit at least one piece of the first information, the second information or the third information to one or more second Stations (STAs). The first information is configured to indicate a Space-time Stream index of Golay Sequence used by a sensing PPDU, the second information is configured to indicate a type of the sensing PPDU, and the third information is configured to indicate a type of a sensing field used by the sensing PPDU.

In some embodiments, the transmitting unit 2101 is configured to transmit a DMG Sensing Measurement Setup element to the one or more second STAs. The DMG Sensing Measurement Setup element carries at least one piece of the first information, the second information or the third information.

In some embodiments, the DMG Sensing Measurement Setup element includes an optional subelement field. The optional subelement field is used for carrying the first subelement, and the first subelement carries at least one piece of the first information, the second information or the third information.

In some embodiments, the first subelement includes at least one of the first field, the second field or the third field. The first field is configured to carry the first information, the second field is configured to carry the second information, and the third field is configured to carry the third information.

In some embodiments, the first subelement further includes at least one of the following fields: a subelement ID field configured to indicate an ID of the first subelement, or the length field configured to indicate a length of fields in the first subelement other than the subelement ID field and the length field.

In some embodiments, the DMG Sensing Measurement Setup element is carried in a DMG Sensing Measurement Setup Request frame.

In some embodiments, the transmitting unit 2101 is configured to transmit a DMG Sensing Request frame to the one or more second STAs. The DMG Sensing Request frame carries at least one piece of the first information, the second information or the third information.

In some embodiments, at least one piece of the first information, the second information or the third information is carried in a TDD Beamforming Information field in the DMG Sensing Request frame.

In some embodiments, the TDD Beamforming Information field includes at least one of the fourth field, the fifth field or the sixth field. The fourth field is configured to carry the first information, the fifth field is configured to carry the second information, and the sixth field is configured to carry the third information.

In some embodiments, the TDD Beamforming Information field includes at least one of an STA ID field, the fifth field or the sixth field. The STA ID field is configured to carry the first information, the fifth field is configured to carry the second information, and the sixth field is configured to carry the third information.

In some embodiments, in a case where a sensing type is the first type of sensing, the STA ID field is configured to indicate an ID of a sensing responder and indicate the Space-time Stream Index of Golay Sequence used by the sensing PPDU.

In some embodiments, in a case where a sensing type is the second type of sensing, the STA ID field is configured to indicate an index of a receiving STA synchronization subfield in the sensing PPDU.

In some embodiments, the TDD Beamforming Information field further includes a seventh field. In a case where the sensing type is the first type of sensing, the seventh field is configured to indicate that a Sensing Measurement Instance mode corresponding to the first type of sensing is a sequential mode or a parallel mode.

In some embodiments, a value of at least one field related to a training (TRN) in a TDD Beamforming Information field in the DMG Sensing Request frame transmitted by the first STA to each of the one or more second STAs is the same.

In some embodiments, the at least one field related to TRN comprises at least one of following fields: an EDMG TRN Length field configured to indicate the number of TRN-Units contained in one sensing PPDU; an RX TRN-Units per each TX TRN-Unit field configured to indicate the number of TRN-Units that are transmitted in the same direction continuously; an EDMG TRN-Unit P field configured to indicate the number of TRN subfields that beam direction is directed at a peer device in one TRN-Unit; an EDMG TRN-Unit M field configured to indicate the number of TRN subfields that beam direction is variable in one TRN-Unit; an EDMG TRN-Unit N field configured to indicate the number of TRN subfields that are transmitted continuously by using the same beam direction among TRN-Unit-M number of TRN subfields; a TRN Subfield Sequence Length field configured to indicate a length of Golay Sequence used by each TRN subfield; or a Bandwidth field configured to indicate a bandwidth used to transmit a TRN field.

In some embodiments, the type of sensing PPDU includes at least one of: DMG control mode PPDU; DMG SC mode PPDU; EDMG control mode PPDU; or EDMG SC mode PPDU.

In some embodiments, the type of the sensing field includes at least one of: a TRN field; or a CEF field.

Those skilled in the art should understand that the related description of the above information indication apparatus according to the embodiment of the present disclosure may be understood with reference to the related description of the information indication method according to the embodiment of the present disclosure.

FIG. 22 is the second schematic diagram of an information indication apparatus provided by an embodiment of the present disclosure. The apparatus is applicable for the second STA. As illustrated in FIG. 22, the apparatus includes a receiving unit 2201.

The receiving unit 2201 is configured to receive at least one piece of first information, second information or third information transmitted by the first STA. The first information is configured to indicate a Space-time Stream index of Golay Sequence used by a sensing PPDU, the second information is configured to indicate a type of the sensing PPDU, and the third information is configured to indicate a type of a sensing field used by the sensing PPDU.

In some embodiments, the receiving unit 2201 is configured to receive a DMG Sensing Measurement Setup element transmitted by the first STA. The DMG Sensing Measurement Setup element carries at least one piece of the first information, the second information or the third information.

In some embodiments, the DMG Sensing Measurement Setup element includes an optional subelement field. The optional subelement field is used for carrying the first subelement. The first subelement carries at least one piece of the first information, the second information or the third information.

In some embodiments, the first subelement includes at least one of the first field, the second field or the third field. The first field is configured to carry the first information, the second field is configured to carry the second information, and the third field is configured to carry the third information.

In some embodiments, the first subelement further includes at least one of following fields: a subelement ID field configured to indicate an ID of the first subelement; or a length field configured to indicate a length of fields in the first subelement other than the subelement ID field and the length field.

In some embodiments, the DMG Sensing Measurement Setup element is carried in a DMG Sensing Measurement Setup Request frame.

In some embodiments, the receiving unit 2201 is configured to receive a DMG Sensing Request frame transmitted by the first STA. The DMG Sensing Request frame carries at least one piece of the first information, the second information or the third information.

In some embodiments, at least one piece of the first information, the second information or the third information is carried in a TDD Beamforming Information field in the DMG Sensing Request frame.

In some embodiments, the TDD Beamforming Information field includes at least one of the fourth field, the fifth field or the sixth field. The fourth field is configured to carry the first information, the fifth field is configured to carry the second information, and the sixth field is configured to carry the third information.

In some embodiments, the TDD Beamforming Information field includes at least one of an STA ID field, the fifth field or the sixth field. The STA ID field is configured to carry the first information, the fifth field is configured to carry the second information, and the sixth field is configured to carry the third information.

In some embodiments, in a case where a sensing type is the first type of sensing, the STA ID field is configured to indicate an ID of a Sensing responder and the Space-time Stream index of Golay Sequence used by the Sensing PPDU.

In some embodiments, in a case where a sensing type is a second type of sensing, the STA ID field is configured to indicate an index of a receiving STA synchronization subfield in the sensing PPDU.

In some embodiments, the TDD Beamforming Information field further includes the seventh field. In a case where the sensing type is the first type of sensing, the seventh field is configured to indicate that a Sensing Measurement Instance mode corresponding to the first type of sensing is a sequential mode or a parallel mode.

In some embodiments, the type of sensing PPDU includes at least one of: DMG control mode PPDU; DMG SC mode PPDU; EDMG control mode PPDU; or EDMG SC mode PPDU.

In some embodiments, the type of the sensing field includes at least one of a TRN field or a CEF field.

In some embodiments, the apparatus further includes a sensing communication unit. The sensing communication unit is configured to transmit and/or receive the sensing PPDU based on at least one piece of the first information, the second information, or the third information.

Those skilled in the art should understand that the related description of the above information indication apparatus according to the embodiment of the present disclosure may be understood with reference to the related description of the information indication method according to the embodiment of the present disclosure.

FIG. 23 is a schematic structural diagram of a communication device 2300 provided by an embodiment of the present disclosure. The communication device may be the first STA or the second STA. The communication device 2300 illustrated in FIG. 23 includes a processor 2310. The processor 2310 may invoke and execute a computer program from a memory to implement the method in the embodiments of the present disclosure.

Alternatively, as illustrated in FIG. 23, the communication device 2300 may further include a memory 2320. The processor 2310 may invoke and execute the computer program from the memory 2320 to implement the methods in the embodiments of the present disclosure.

The memory 2320 may be a separate device independent of the processor 2310 or may be integrated in the processor 2310.

Alternatively, as illustrated in FIG. 23, the communication device 2300 may further include a transceiver 2330. The processor 2310 may control the transceiver 2330 to communicate with other devices, specifically, may transmit information or data to other devices, or may receive information or data transmitted by other devices.

The transceiver 2330 may include a transmitter and a receiver. The transceiver 2330 may further include one or more antennas.

Alternatively, the communication device 2300 may specifically be the first STA of the embodiment of the present disclosure, and the communication device 2300 may implement corresponding processes implemented by the first STA in various methods of the embodiments of the present disclosure, which will not be described herein for the sake of brevity.

Alternatively, the communication device 2300 may specifically be the second STA of the embodiment of the present disclosure, and the communication device 2300 may implement corresponding processes implemented by the second STA in various methods of the embodiments of the present disclosure, which will not be described herein for the sake of brevity.

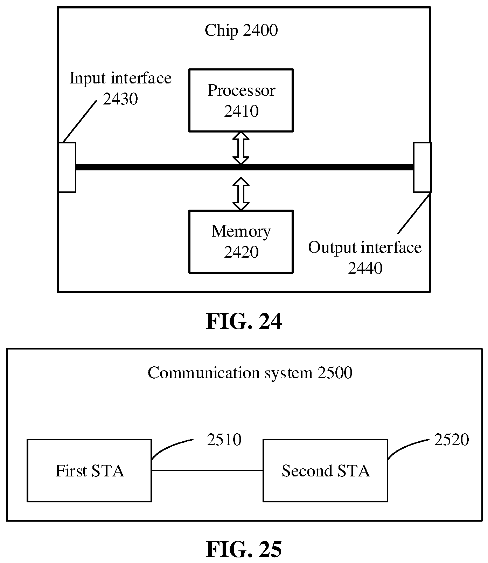

FIG. 24 is a schematic structural diagram of a chip provided by an embodiment of the present disclosure. The chip 2400 illustrated in FIG. 24 includes a processor 2410, and the processor 2410 may invoke and execute a computer program from a memory to implement the methods in the embodiments of the present disclosure.

Alternatively, as illustrated in FIG. 24, the chip 2400 may further include a memory 2420. The processor 2410 may invoke and execute a computer program from the memory 2420 to implement the methods in the embodiments of the present disclosure.

The memory 2420 may be a separate device independent of the processor 2410 or may be integrated in the processor 2410.

Alternatively, the chip 2400 may further include an input interface 2430. The processor 2410 may control the input interface 2430 to communicate with other devices or chips, specifically, may acquire information or data transmitted by other devices or chips.

Alternatively, the chip 2400 may further include an output interface 2440. The processor 2410 may control the output interface 2440 to communicate with other devices or chips, specifically, may output information or data to other devices or chips.

Alternatively, the chip may be applied to the first STA in the embodiments of the present disclosure, and the chip may implement the corresponding processes implemented by the first STA in various methods of the embodiments of the present disclosure, which will not be described herein for the sake of brevity.

Alternatively, the chip may be applied to the second STA in the embodiments of the present disclosure, and the chip may implement the corresponding processes implemented by the second STA in various methods of the embodiments of the present disclosure.

It should be understood that the chip mentioned in the embodiment of the present disclosure may also be referred to as a system level chip, a system chip, a chip system or a system-on-chip or the like.

FIG. 25 is a schematic block diagram of a communication system 2500 provided by an embodiment of the present disclosure. As illustrated in FIG. 25, the communication system 2500 includes the first STA 2510 and the second STA 2520.

The first STA 2510 may be configured to implement the corresponding functions implemented by the first STA in the above methods, and the second STA 2520 may be configured to implement the corresponding functions implemented by the second STA in the above methods, which will not be described herein for the sake of brevity.

It should be understood that the processor of the embodiments of the present disclosure may be an integrated circuit chip having signal processing capabilities. In the implementation process, the operations of the above method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, operations, and logical block diagrams disclosed in the embodiments of the present disclosure may be implemented or executed. The general-purpose processor may be a microprocessor or the processor may be any conventional processor or the like. The operations of the method disclosed in combination with the embodiments of the present disclosure may be directly embodied as execution by the hardware decoding processor, or may be executed by a combination of hardware and software modules in the decoding processor. The software module may be located in a Random Access Memory (RAM), a flash memory, a Read-Only Memory (ROM), a Programmable ROM (PROM), an electrically erasable PROM (EEPROM), a register and other storage medium mature in the art. The storage medium is located in the memory, and the processor reads the information in the memory and completes the operations of the methods in combination with its hardware.

It is understood that the memory in the embodiments of the present disclosure may be a volatile memory or a non-volatile memory, or may include both volatile and non-volatile memory. The non-volatile memory may be a ROM, a PROM, an Erasable PROM (EPROM), an EEPROM, or a flash memory. The volatile memory may be a RAM, which serves as an external cache. By way of illustration, but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) and Direct Rambus RAM (DR RAM). It should be noted that the memory of the systems and methods described herein is intended to include, but is not limited to, these and any other suitable type of memory.

It should be understood that the above memory is exemplary, but not limiting, and, for example, the memory in embodiments of the present disclosure may also be an SRAM, a DRAM, an SDRAM, a DDR SDRAM, an ESDRAM, an SLDRAM, a DR RAM, etc. That is, the memory in embodiments of the present disclosure is intended to include but not limited to these and any other suitable types of memory.

Embodiments of the present disclosure further provide a computer readable storage medium for storing a computer program.

Alternatively, the computer readable storage medium may be applied to the first STA in the embodiments of the present disclosure, and the computer program causes the computer to execute the corresponding processes implemented by the first STA in various methods of the embodiments of the present disclosure, which will not be described herein for the sake of brevity.

Alternatively, the computer readable storage medium may be applied to the second STA in the embodiments of the present disclosure, and the computer program causes the computer to execute the corresponding processes implemented by the second STA in various methods of the embodiments of the present disclosure, which will not be described herein for the sake of brevity.

Embodiments of the present disclosure further provide a computer program product including computer program instructions.

Alternatively, the computer program product may be applied to the first STA in the embodiments of the present disclosure, and the computer program instructions cause the computer to execute the corresponding processes implemented by the first STA in various methods of the embodiments of the present disclosure, which will not be described herein for the sake of brevity.

Alternatively, the computer program product may be applied to the second STA in the embodiments of the present disclosure, and the computer program instruction causes the computer to execute the corresponding processes implemented by the second STA in various methods of the embodiments of the present disclosure, which will not be described herein for the sake of brevity.

Embodiments of the present disclosure further provide a computer program.

Alternatively, the computer program may be applied to the first STA in the embodiments of the present disclosure, and when the computer program is executed on the computer, the computer executes the corresponding processes implemented by the first STA in various methods of the embodiments of the present disclosure, which will not be described herein for the sake of brevity.

Alternatively, the computer program may be applied to the second STA in the embodiments of the present disclosure, and when the computer program is executed on the computer, the computer executes the corresponding processes implemented by the second STA in various methods of the embodiments of the present disclosure, which will not be described herein for the sake of brevity.

Those of ordinary skill in the art will appreciate that the various exemplary units and algorithm steps described in combination with the embodiments disclosed herein may be implemented in electronic hardware or a combination of computer software and electronic hardware. Whether these functions are performed in hardware or software depends on the specific application and design constraints of the technical solutions. Professionals may use different methods for each particular application to implement the described functionality, but such implementation should not be considered outside the scope of the present disclosure.

Those skilled in the art will clearly appreciate that, for convenience and conciseness of description, the specific operating processes of the above described systems, apparatuses and units may refer to the corresponding processes in the aforementioned method embodiments, which will not be described herein for the sake of brevity.

In several embodiments provided herein, it should be understood that the disclosed systems, apparatuses and methods may be implemented in other ways. For example, the above embodiments of the apparatuses are only schematic, for example, the division of the units is only a logical function division, and in practice, there may be another division mode, for example, multiple units or components may be combined or integrated into another system, or some features may be ignored or not performed. On the other hand, the coupling, direct coupling or communication connection between each other shown or discussed may be indirect coupling or communication connection through some interfaces, apparatus or units, and may be electrical, mechanical or other form.

The units illustrated as separate components may or may not be physically separated, and the components displayed as units may or may not be physical units, i.e., may be located in one place, or may be distributed over multiple network units. Part or all of the units may be selected according to the actual needs to achieve the purpose of the embodiments.

In addition, various functional units in various embodiments of the present disclosure may be integrated in one processing unit, each unit may exist physically alone, or two or more units may be integrated in one unit.

When implemented in the form of software functional units, and sold or used as stand-alone products, the functions may be stored in a computer readable storage medium. With this understanding, the technical solution of the present disclosure in essence or in part contributing to the prior art may be embodied in the form of a software product. The computer software product is stored in a storage medium, and includes instructions for causing a computer device (which may be a personal computer, a server, a network device, etc.) to perform all or part of the steps of the methods described in various embodiments of the present disclosure. The above storage medium includes a U disk, a removable hard disk, a ROM, a RAM, a magnetic disk or an optical disk and other medium capable of storing program codes.

The above is only the specific embodiments of the present disclosure, but the scope of protection of the present disclosure is not limited thereto. Any technical person familiar with the technical field can easily think of changes or substitutions within the technical scope disclosed in the present disclosure, which should be covered within the scope of protection of the present disclosure. Therefore, the scope of protection of the present disclosure shall be subject to the scope of protection of the claims.

**Claims**

1. An information indication method, comprising:
   transmitting, by a first Station (STA), at least one piece of first information, second information or third information to one or more second STAs, wherein the first information is configured to indicate a Space-time Stream index of Golay Sequence used by a sensing Physical Layer Protocol Data Unit (PPDU), the second information is configured to indicate a type of the sensing PPDU, and the third information is configured to indicate a type of a sensing field used by the sensing PPDU.

2. The method of claim 1, wherein transmitting, by the first STA, at least one piece of the first information, the second information or the third information to the one or more second STAs comprises:
   transmitting, by the first STA, a Directional multi-gigabit (DMG) Sensing Measurement Setup element to the one or more second STAs, wherein the DMG Sensing Measurement Setup element carries at least one piece of the first information, the second information or the third information.

3. The method of claim 2, wherein the DMG Sensing Measurement Setup element comprises an optional subelement field, the optional subelement field is used for carrying a first subelement, and the first subelement carries at least one piece of the first information, the second information or the third information.

4. The method of claim 3, wherein the first subelement comprises at least one of a first field, a second field or a third field, the first field is configured to carry the first information, the second field is configured to carry the second information, and the third field is configured to carry the third information.

5. The method of claim 4, wherein the first subelement further comprises at least one of following fields:

   a subelement identification (ID) field, configured to indicate an ID of the first subelement; or
   a length field, configured to indicate a length of fields in the first subelement other than the subelement ID field and the length field.

6. The method of any one of claims 2 to 5, wherein the DMG Sensing Measurement Setup element is carried in a DMG Sensing Measurement Setup Request frame.

7. The method of any one of claims 1 to 6, wherein transmitting, by the first STA, at least one piece of the first information, the second information or the third information to the one or more second STAs comprises:
   transmitting, by the first STA, a DMG Sensing Request frame to the one or more second STAs, wherein the DMG Sensing Request frame carries at least one piece of the first information, the second information or the third information.

8. The method of claim 7, wherein at least one piece of the first information, the second information or the third information is carried in a Time Division Duplex (TDD) Beamforming Information field in the DMG Sensing Request frame.

9. The method of claim 8, wherein the TDD Beamforming Information field comprises at least one of a fourth field, a fifth field or a sixth field, the fourth field is configured to carry the first information, the fifth field is configured to carry the second information, and the sixth field is configured to carry the third information.

10. The method of claim 8, wherein the TDD Beamforming Information field comprises at least one of an STA ID field, a fifth field or a sixth field, the STA ID field is configured to carry the first information, the fifth field is configured to carry the second information, and the sixth field is configured to carry the third information.

11. The method of claim 10, wherein in a case where a sensing type is a first type of sensing, the STA ID field is configured to indicate an ID of a sensing responder and indicate the Space-time Stream Index of Golay Sequence used by the sensing PPDU.

12. The method of claim 10, wherein in a case where a sensing type is a second type of sensing, the STA ID field is configured to indicate an index of a receiving STA synchronization subfield in the sensing PPDU.

13. The method of claim 10 or 11, wherein the TDD Beamforming Information field further comprises a seventh field, and in a case where the sensing type is the first type of sensing, the seventh field is configured to indicate that a sensing measurement instance mode corresponding to the first type of sensing is a sequential mode or a parallel mode.

14. The method of any one of claims 7 to 13, wherein a value of at least one field related to training (TRN) in a TDD Beamforming Information field in the DMG Sensing Request frame transmitted by the first STA to each of the one or more second STAs is the same.

15. The method of claim 14, wherein the at least one field related to TRN comprises at least one of following fields:

> an enhanced DMG (EDMG) TRN Length field, configured to indicate a number of TRN-Units contained in one sensing PPDU;
> a reception TRN-Units (RX TRN-Units) per each transmission TRN-Unit (TX TRN-Unit) field (RX TRN-Units per Each TX TRN-Unit field), configured to indicate a number of TRN-Units that are transmitted in a same direction continuously;
> an EDMG TRN-Unit P field, configured to indicate a number of TRN subfields that beam direction is directed at a peer device in one TRN-Unit;
> an EDMG TRN-Unit M field, configured to indicate a number of TRN subfields that beam direction is variable in one TRN-Unit;
> an EDMG TRN-Unit N field, configured to indicate a number of TRN subfields that are transmitted continuously by using a same beam direction among TRN-Unit-M number of TRN subfields;
> a TRN Subfield Sequence Length field, configured to indicate a length of Golay Sequence used by each TRN subfield; or
> a Bandwidth field, configured to indicate a bandwidth used to transmit a TRN field.

16. The method of any one of claims 1 to 15, wherein the type of the sensing PPDU comprises at least one of:

> DMG control mode PPDU;
> DMG single carrier (SC) mode PPDU;
> EDMG control mode PPDU; or
> EDMG SC mode PPDU.

17. The method of any one of claims 1 to 16, wherein the type of the sensing field comprises at least one of:

> a training (TRN) field; or
> a Channel Estimation Filter (CEF) field.

18. An information indication method, comprising:
receiving, by a second station (STA), at least one piece of first information, second information or third information transmitted by a first STA, wherein the first information is configured to indicate a Space-time Stream index of Golay Sequence used by a sensing Physical Layer Protocol Data Unit (PPDU), the second information is configured to indicate a type of the sensing PPDU, and the third information is configured to indicate a type of a sensing field used by the sensing PPDU.

19. The method of claim 18, wherein receiving, by the second STA, at least one piece of the first information, the second information or the third information transmitted by the first STA comprises:
receiving, by the second STA, a Directional multi-gigabit (DMG) Sensing Measurement Setup element transmitted by the first STA, wherein the DMG Sensing Measurement Setup element carries at least one piece of the first information, the second information or the third information.

20. The method of claim 19, wherein the DMG Sensing Measurement Setup element comprises an optional subelement field, the optional subelement field is used for carrying a first subelement, and the first subelement carries at least one piece of the first information, the second information or the third information.

21. The method of claim 20, wherein the first subelement comprises at least one of a first field, a second field or a third field, the first field is configured to carry the first information, the second field is configured to carry the second information, and the third field is configured to carry the third information.

22. The method of claim 21, wherein the first subelement further comprises at least one of following fields:

    a subelement identification (ID) field, configured to indicate an ID of the first subelement; or
    a length field, configured to indicate a length of fields in the first subelement other than the subelement ID field and the length field.

23. The method of any one of claims 19 to 22, wherein the DMG Sensing Measurement Setup element is carried in a DMG Sensing Measurement Setup Request frame.

24. The method of any one of claims 18 to 23, wherein receiving, by the second STA, at least one piece of the first information, the second information, or the third information transmitted by the first STA comprises:
    receiving, by the second STA, a DMG Sensing Request frame transmitted by the first STA, wherein the DMG Sensing Request frame carries at least one piece of the first information, the second information or the third information.

25. The method of claim 24, wherein at least one piece of the first information, the second information or the third information is carried in a Time Division Duplex (TDD) Beamforming Information field in the DMG Sensing Request frame.

26. The method of claim 25, wherein the TDD Beamforming Information field comprises at least one of a fourth field, a fifth field or a sixth field, the fourth field is configured to carry the first information, the fifth field is configured to carry the second information, and the sixth field is configured to carry the third information.

27. The method of claim 25, wherein the TDD Beamforming Information field comprises at least one of an STA ID field, a fifth field or a sixth field, the STA ID field is configured to carry the first information, the fifth field is configured to carry the second information, and the sixth field is configured to carry the third information.

28. The method of claim 27, wherein in a case where a sensing type is a first type of sensing, the STA ID field is configured to indicate an ID of a Sensing responder and indicate the Space-time Stream index of Golay Sequence used by the Sensing PPDU.

29. The method of claim 27, wherein in a case where a sensing type is a second type of sensing, the STA ID field is configured to indicate an index of a receiving STA synchronization subfield in the sensing PPDU.

30. The method of claim 27 or 28, wherein the TDD Beamforming Information field further comprises a seventh field, and in a case where the sensing type is the first type of sensing, the seventh field is configured to indicate that a sensing measurement instance mode corresponding to the first type of sensing is a sequential mode or a parallel mode.

31. The method of any one of claims 18 to 30, wherein the type of the sensing PPDU comprises at least one of:

    DMG control mode PPDU;
    DMG single carrier (SC) mode PPDU;
    enhanced DMG (EDMG) control mode PPDU; or
    EDMG SC mode PPDU.

32. The method of any one of claims 18 to 31, wherein the type of the sensing field comprises at least one of:

    a training (TRN) field; or
    a Channel Estimation Filter (CEF) field.

33. That method of any one of claims 18 to 32, further comprising:
    transmitting and/or receiving, by the second STA, the sensing PPDU based on at least one piece of the first information, the second information, or the third information.

34. An information indication apparatus, applicable for a first STA, comprising:
a transmitting unit, configured to transmit at least one piece of first information, second information or third information to one or more second Stations (STAs), wherein the first information is configured to indicate a Space-time Stream index of Golay Sequence used by a sensing Physical Layer Protocol Data Unit (PPDU), the second information is configured to indicate a type of the sensing PPDU, and the third information is configured to indicate a type of a sensing field used by the sensing PPDU.

35. An information indication apparatus, applicable for a second STA, comprising:
a receiving unit, configured to receive at least one piece of first information, second information or third information transmitted by a first station (STA), wherein the first information is configured to indicate a Space-time Stream index of Golay Sequence used by a sensing Physical Layer Protocol Data Unit (PPDU), the second information is configured to indicate a type of the sensing PPDU, and the third information is configured to indicate a type of a sensing field used by the sensing PPDU.

36. A communication device, comprising a processor and a memory, wherein the memory is configured to store a computer program, and the processor is configured to invoke and execute the computer program stored in the memory to perform the method of any one of claims 1 to 17, or to perform the method of any one of claims 18 to 33.

37. A chip, comprising a processor configured to invoke and execute a computer program from a memory to cause a device on which the chip is mounted to perform the method of any one of claims 1 to 17, or to perform the method of any one of claims 18 to 33.

38. A computer readable storage medium, for storing a computer program that causes a computer to perform the method of any one of claims 1 to 17, or to perform the method of any one of claims 18 to 33.

39. A computer program product, comprising computer program instructions that cause a computer to perform the method of any one of claims 1 to 17, or to perform the method of any one of claims 18 to 33.

40. A computer program causing a computer to perform the method of any one of claims 1 to 17, or to perform the method of any one of claims 18 to 33.

**FIG. 1**

(a) Monostatic Sensing

(b) Bistatic Sensing

(c) Coordinated
Monostatic Sensing

(d) Coordinated
Bistatic Sensing

(e) Multistatic Sensing

**FIG. 2**

FIG. 3

**FIG. 4(a)**

**FIG. 4(b)**

| | Element ID | Length | Element ID Extended | Measurement Setup Control | Report Type | LCI | Peer Orientation | Optional subelement |
|---|---|---|---|---|---|---|---|---|
| Number of octets (Octets) | 1 | 1 | 1 | 1 | 1 | 0 or 16 | 0 or 5 | Variable |

Measurement Setup Control:

| | Sensing Type | RX Initiator | LCI Present | Orientation Present | Reserved |
|---|---|---|---|---|---|
| | B0 – B2 | B3 | B4 | B5 | B6 – B7 |
| Number of bits (Bits) | 3 | 1 | 1 | 1 | 2 |

Peer Orientation:

| | Azimuth | Elevation | Range |
|---|---|---|---|
| | B0 – B11 | B12 – B23 | B24 – B39 |
| Number of bits (Bits) | 12 | 12 | 16 |

**FIG. 5**

34

**FIG. 6**

| | Frame Control | Duration | RA | TA | TDD Beamforming Control | TDD Beamforming Information | Frame Check |
|---|---|---|---|---|---|---|---|
| Number of octets (Octets) | 2 | 2 | 6 | 6 | 1 | Variable | 4 |

MAC Frame Header / MAC Frame Body

| | B0 | B1 | B2 B3 | B4 | B5 B7 |
|---|---|---|---|---|---|
| | TDD Group Beamforming (=0) | TDD Beam Measurement (=0) | TDD Beamforming Frame Type (=3) | Training End | Reserved |
| Number of bits (Bits) | 1 | 1 | 2 | 1 | 3 |

MAC Frame Header | MAC Frame Body

| Frame Control | Duration | RA | TA | TDD Beamforming Control | TDD Beamforming Information | Frame Check |
|---|---|---|---|---|---|---|

Number of octets (Octets):

| 2 | 2 | 6 | 6 | 1 | 10 | 4 |
|---|---|---|---|---|---|---|

| | B0 | B1 | B2 | B3 | B4 | B5 | B7 |
|---|---|---|---|---|---|---|---|

| TDD Group Beamforming (=0) | TDD Beam Measurement (=0) | TDD Beamforming Frame Type (=3) | Training End | Reserved |
|---|---|---|---|---|

Number of bits (Bits):

| 1 | 1 | 2 | 1 | 3 |
|---|---|---|---|---|

| B0 | B7 | B8 | B15 | B16 | B23 | B24 | B26 | B27 | B29 | B30 | B37 |
|---|---|---|---|---|---|---|---|---|---|---|---|

| Measurement Setup ID | Measurement Burst ID | Measurement Instance Number | Sensing type | STA ID | First Beam Index |
|---|---|---|---|---|---|
| 8 | 8 | 8 | 3 | 3 | 8 |

| B38 | B40 | B41 | B42 | B43 | B50 | B51 | B58 | B59 | B60 |
|---|---|---|---|---|---|---|---|---|---|

| Num of STAs in Instance | Num of PPDUs in Instance | EDMG TRN Length | RX TRN-Units per Each TX TRN-Unit | EDMG TRN-Unit P |
|---|---|---|---|---|
| 3 | 2 | 8 | 8 | 2 |

| B61 | B64 | B65 | B66 | B67 | B68 | B69 | B76 | B77 | B79 |
|---|---|---|---|---|---|---|---|---|---|

| EDMG TRN-Unit M | EDMG TRN-Unit N | TRN Subfield Sequence Length | Bandwidth | Reserved |
|---|---|---|---|---|
| 4 | 2 | 2 | 8 | 3 |

**FIG. 7**

| | | | | MAC Frame Header | | | | MAC Frame Body | |
|---|---|---|---|---|---|---|---|---|---|

| Frame Control | Duration | RA | TA | TDD Beamforming Control | Frame Check |
|---|---|---|---|---|---|

Number of octets (Octets)

| 2 | 2 | 6 | 6 | 1 | 4 |
|---|---|---|---|---|---|

| B0 | B1 | B2 | B3 | B4 | B5 | B7 |
|---|---|---|---|---|---|---|
| TDD Group Beamforming (=0) | TDD Beam Measurement (=1) | TDD Beamforming Frame Type (=3) | | Training End | Reserved | |

Number of bits (Bits)

| 1 | 1 | 2 | 1 | 3 |
|---|---|---|---|---|

**FIG. 8**

|  | ←————————MAC Frame Header————————→ | ←————————MAC Frame Body————————→ | |
|---|---|---|---|

| Frame Control | Duration | RA | TA | TDD Beamforming Control | TDD Beamforming Information | Frame Check |
|---|---|---|---|---|---|---|

Number of octets (Octets)

| 2 | 2 | 6 | 6 | 1 | 4 | 4 |
|---|---|---|---|---|---|---|

| B0 | B1 | B2 | B3 | B4 | B5 | B7 | | B0 | B7 | B8 | B15 | B16 | B23 | B24 | B31 |

| TDD Group Beamforming (=1) | TDD Beam Measurement (=0) | TDD Beamforming Frame Type (=3) | Training End | Reserved | Measurement Setup ID | Measurement Burst ID | Measurement Instance ID | Reserved |
|---|---|---|---|---|---|---|---|---|

Number of bits (Bits)

| 1 | 1 | 2 | 1 | 3 | 8 | 8 | 8 | 8 |
|---|---|---|---|---|---|---|---|---|

**FIG. 9**

FIG. 10

| 1101 |
| --- |
| The first STA transmits at least one piece of the first information, the second information or the third information to one or more second STAs |

| 1102 |
| --- |
| The second STA receives at least one piece of the first information, the second information or the third information transmitted by the first STA. The first information is configured to indicate a Space-time Stream index of Golay Sequence used by a sensing PPDU, the second information is configured to indicate a type of the sensing PPDU, and the third information is configured to indicate a type of sensing field used by the sensing PPDU |

FIG. 11

|  | Subelement ID | Length | Space-time Stream Index of Golay Sequence | Reserved |
| --- | --- | --- | --- | --- |
| Bits | 8 | 8 | 3 | 5 |

FIG. 12

|  | Subelement ID | Length | Space-time Stream Index of Golay Sequence | Sensing PPDU Type | Sensing Field Type | Reserved |
| --- | --- | --- | --- | --- | --- | --- |
| Bits | 8 | 8 | 3 | 3 | 1 | 1 |

FIG. 13

**MAC Frame Header** / **MAC Frame Body**

| Frame Control | Duration | RA | TA | TDD Beamforming Control | TDD Beamforming Information | Frame Check |
|---|---|---|---|---|---|---|

Number of octets (Octets):

| 2 | 2 | 6 | 6 | 1 | 11 | 4 |
|---|---|---|---|---|---|---|

TDD Beamforming Control:

| B0 | B1 | B2 B3 | B4 | B5 B7 |
|---|---|---|---|---|
| TDD Group Beamforming (=0) | TDD Beam Measurement (=0) | TDD Beamforming Frame Type (=3) | Training End | Reserved |

Number of bits (Bits):

| 1 | 1 | 2 | 1 | 3 |
|---|---|---|---|---|

TDD Beamforming Information:

| B0 — B7 | B8 — B15 | B16 — B23 | B24 B26 | B27 B29 | B30 — B37 |
|---|---|---|---|---|---|
| Measurement Setup ID | Measurement Burst ID | Measurement Instance Number | Sensing type | STA ID | First Beam Index |
| 8 | 8 | 8 | 3 | 3 | 8 |

| B38 B40 | B41 B42 | B43 B50 | B51 B58 | B59 B60 |
|---|---|---|---|---|
| Num of STAs in Instance | Num of PPDUs in Instance | EDMG TRN Length | RX TRN-Units per Each TX TRN-Unit | EDMG TRN-Unit P |
| 3 | 2 | 8 | 8 | 2 |

| B61 B64 | B65 B66 | B67 B68 | B69 B76 | B77 B79 | B80 B87 |
|---|---|---|---|---|---|
| EDMG TRN-Unit M | EDMG TRN-Unit N | TRN Subfield Sequence Length | Bandwidth | Space-time Stream Index of Golay Sequence | Reserved |
| 4 | 2 | 2 | 8 | 3 | 8 |

**FIG. 14**

EP 4 564 693 A1

EP 4 564 693 A1

| | MAC Frame Header | | | MAC Frame Body | | |
|---|---|---|---|---|---|---|
| Frame Control | Duration | RA | TA | TDD Beamforming Control | TDD Beamforming Information | Frame Check |
| 2 | 2 | 6 | 6 | 1 | 10 | 4 |

Number of octets (Octets)

| B0 | B1 | B2 — B3 | B4 | B5 — B7 |
|---|---|---|---|---|
| TDD Group Beamforming (=0) | TDD Beam Measurement (=0) | TDD Beamforming Frame Type (=3) | Training End | Reserved |
| 1 | 1 | 2 | 1 | 3 |

Number of bits (Bits)

| B0 — B7 | B8 — B15 | B16 — B23 | B24 — B26 | B27 — B29 | B30 — B37 |
|---|---|---|---|---|---|
| Measurement Setup ID | Measurement Burst ID | Measurement Instance Number | Sensing type | STA ID | First Beam Index |
| 8 | 8 | 8 | 3 | 3 | 8 |

| B38 — B40 | B41 — B42 | B43 — B50 | B51 — B58 | B59 — B60 |
|---|---|---|---|---|
| Num of STAs in Instance | Num of PPDUs in Instance | EDMG TRN Length | RX TRN-Units per Each TX TRN-Unit | EDMG TRN-Unit P |
| 3 | 2 | 8 | 8 | 2 |

| B61 — B64 | B65 — B66 | B67 — B68 | B69 — B76 | B77 — B79 |
|---|---|---|---|---|
| EDMG TRN-Unit M | EDMG TRN-Unit N | TRN Subfield Sequence Length | Bandwidth | Reserved |
| 4 | 2 | 2 | 8 | 3 |

**FIG. 15-1**

EP 4 564 693 A1

MAC Frame Header | MAC Frame Body

| Frame Control | Duration | RA | TA | TDD Beamforming Control | TDD Beamforming Information | Frame Check |
|---|---|---|---|---|---|---|

Number of octets (Octets)

| 2 | 2 | 6 | 6 | 1 | 10 | 4 |
|---|---|---|---|---|---|---|

| B0 | B1 | B2 | B3 | B4 | B5 | B7 |
|---|---|---|---|---|---|---|
| TDD Group Beamforming (=0) | TDD Beam Measurement (=0) | TDD Beamforming Frame Type (=3) | | Training End | Reserved | |

Number of bits (Bits)

| 1 | 1 | 2 | 1 | 3 |
|---|---|---|---|---|

| B0 | B7 | B8 | B15 | B16 | B23 | B24 | B26 | B27 | B29 | B30 | B37 |
|---|---|---|---|---|---|---|---|---|---|---|---|
| Measurement Setup ID | | Measurement Burst ID | | Measurement Instance Number | | Sensing type | | STA ID | | First Beam Index | |

| 8 | 8 | 8 | 3 | 3 | 8 |
|---|---|---|---|---|---|

| B38 | B40 | B41 | B42 | B43 | B50 | B51 | B58 | B59 | B60 |
|---|---|---|---|---|---|---|---|---|---|
| Num of STAs in Instance | | Num of PPDUs in Instance | | EDMG TRN Length | | RX TRN-Units per Each TX TRN-Unit | | EDMG TRN-Unit P | |

| 3 | 2 | 8 | 8 | 2 |
|---|---|---|---|---|

| B61 | B64 | B65 | B66 | B67 | B68 | B69 | B76 | B77 | B78 | B79 |
|---|---|---|---|---|---|---|---|---|---|---|
| EDMG TRN-Unit M | | EDMG TRN-Unit N | | TRN Subfield Sequence Length | | Bandwidth | | Sensing Measurement Instance Mode | Reserved |

| 4 | 2 | 2 | 8 | 1 | 2 |
|---|---|---|---|---|---|

**FIG. 15-2**

MAC Frame Header | MAC Frame Body

| Frame Control | Duration | RA | TA | TDD Beamforming Control | TDD Beamforming Information | Frame Check |
|---|---|---|---|---|---|---|

Number of octets (Octets)

| 2 | 2 | 6 | 6 | 1 | 11 | 4 |
|---|---|---|---|---|---|---|

B0 B1 B2 B3 B4 B5 B7

| TDD Group Beamforming (=0) | TDD Beam Measurement (=0) | TDD Beamforming Frame Type (=3) | Training End | Reserved |
|---|---|---|---|---|

Number of bits (Bits)

| 1 | 1 | 2 | 1 | 3 |
|---|---|---|---|---|

B0 B7 B8 B15 B16 B23 B24 B26 B27 B29 B30 B37

| Measurement Setup ID | Measurement Burst ID | Measurement Instance Number | Sensing type | STA ID | First Beam Index |
|---|---|---|---|---|---|
| 8 | 8 | 8 | 3 | 3 | 8 |

B38 B40 B41 B42 B43 B50 B51 B58 B59 B60

| Num of STAs in Instance | Num of PPDUs in Instance | EDMG TRN Length | RX TRN-Units per Each TX TRN-Unit | EDMG TRN-Unit P |
|---|---|---|---|---|
| 3 | 2 | 8 | 8 | 2 |

B61 B64 B65 B66 B67 B68 B69 B76 B77 B79 B80 B82

| EDMG TRN-Unit M | EDMG TRN-Unit N | TRN Subfield Sequence Length | Bandwidth | Space-time Stream Index of Golay Sequence | Sensing PPDU Type |
|---|---|---|---|---|---|
| 4 | 2 | 2 | 8 | 3 | 3 |

B83 B84 B87

| Sensing Field Type | Reserved |
|---|---|
| 1 | 4 |

FIG. 16

**FIG. 17-1**

MAC Frame Header — MAC Frame Body

| Frame Control | Duration | RA | TA | TDD Beamforming Control | TDD Beamforming Information | Frame Check |
|---|---|---|---|---|---|---|

Number of octets (Octets): 2 | 2 | 6 | 6 | 1 | 11 | 4

TDD Beamforming Control (B0–B7):

| B0 TDD Group Beamforming (=0) | B1 TDD Beam Measurement (=0) | B2 B3 TDD Beamforming Frame Type (=3) | B4 Training End | B5 B7 Reserved |
|---|---|---|---|---|

Number of bits (Bits): 1 | 1 | 2 | 1 | 3

TDD Beamforming Information:

| B0 B7 Measurement Setup ID | B8 B15 Measurement Burst ID | B16 B23 Measurement Instance Number | B24 B26 Sensing type | B27 B29 STA ID | B30 B37 First Beam Index |
|---|---|---|---|---|---|
| 8 | 8 | 8 | 3 | 3 | 8 |

| B38 B40 Num of STAs in Instance | B41 B42 Num of PPDUs in Instance | B43 B50 EDMG TRN Length | B51 B58 RX TRN-Units per Each TX TRN-Unit | B59 B60 EDMG TRN-Unit P |
|---|---|---|---|---|
| 3 | 2 | 8 | 8 | 2 |

| B61 B64 EDMG TRN-Unit M | B65 B66 EDMG TRN-Unit N | B67 B68 TRN Subfield Sequence Length | B69 B76 Bandwidth | B77 B79 Sensing PPDU Type | B80 Sensing Field Type |
|---|---|---|---|---|---|
| 4 | 2 | 2 | 8 | 3 | 1 |

| B81 B87 Reserved |
|---|
| 7 |

44

EP 4 564 693 A1

MAC Frame Header | MAC Frame Body

| Frame Contro | Duration | RA | TA | TDD Beamforming Control | TDD Beamforming Information | Frame Check |
|---|---|---|---|---|---|---|

Number of octets (Octets)

| 2 | 2 | 6 | 6 | 1 | 11 | 4 |
|---|---|---|---|---|---|---|

| B0 | B1 | B2 — B3 | B4 | B5 — B7 |
|---|---|---|---|---|
| TDD Group Beamforming (=0) | TDD Beam Measurement (=0) | TDD Beamforming Frame Type (=3) | Training End | Reserved |

Number of bits (Bits)

| 1 | 1 | 2 | 1 | 3 |
|---|---|---|---|---|

| B0 — B7 | B8 — B15 | B16 — B23 | B24 — B26 | B27 — B29 | B30 — B37 |
|---|---|---|---|---|---|
| Measurement Setup ID | Measurement Burst ID | Measurement Instance Number | Sensing type | STA ID | First Beam Index |
| 8 | 8 | 8 | 3 | 3 | 8 |

| B38 — B40 | B41 — B42 | B43 — B50 | B51 — B58 | B59 — B60 |
|---|---|---|---|---|
| Num of STAs in Instance | Num of PPDUs in Instance | EDMG TRN Length | RX TRN-Units per Each TX TRN-Unit | EDMG TRN-Unit P |
| 3 | 2 | 8 | 8 | 2 |

| B61 — B64 | B65 — B66 | B67 — B68 | B69 — B76 | B77 — B79 | B80 |
|---|---|---|---|---|---|
| EDMG TRN-Unit M | EDMG TRN-Unit N | TRN Subfield Sequence Length | Bandwidth | Sensing PPDU Type | Sensing Field Type |
| 4 | 2 | 2 | 8 | 3 | 1 |

| B81 | B82 — B87 |
|---|---|
| Sensing Measurement Instance Mode | Reserved |
| 1 | 6 |

**FIG. 17-2**

45

**FIG. 18**

EDMG-STF        EDMG-STF        STF             L-STF           Header          AGC             Header          Header
EDMG-CEF        EDMG-CEF        CEF             L-CEF           Data                            Data            Data
Data(EDMG)      TRN(EDMG)       TRN             L-TRN           AGC                             L-Header        L-Header
TRN(EDMG)                       L-STF           TRN             L-Header                        EDMG-Header-A   EDMG-Header-A
                                L-CEF                           EDMG-Header-A                   EDMG-Header-B   EDMG-Header-B
                                TRN(EDMG)                                                       Data(EDMG)      Data(EDMG)

**FIG. 19-1**

EP 4 564 693 A1

FIG. 19-2

FIG. 20-1

EP 4 564 693 A1

**FIG. 20-2**

Information indication apparatus

Transmitting unit 2101

**FIG. 21**

Information indication apparatus

Receiving unit 2201

**FIG. 22**

Communication device 2300

| Memory 2320 | Processor 2310 |

Transceiver 2330

**FIG. 23**

Chip 2400

Input interface
2430

Processor
2410

Memory
2420

Output interface
2440

**FIG. 24**

Communication system 2500

2510

First STA

2520

Second STA

**FIG. 25**

## INTERNATIONAL SEARCH REPORT

<table>
<tr><td>International application No.<br><br>**PCT/CN2022/114342**</td></tr>
</table>

**A. CLASSIFICATION OF SUBJECT MATTER**

H04B7/06(2006.01)i

According to International Patent Classification (IPC) or to both national classification and IPC

**B. FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI; IEEE: 毫米波, 感知, 测量, 协议数据单元, 模式, 类型, 字段, 指示, 通知, 格雷, 序列, 序号, 字段, 干扰, sensing, PPDU, DMG, EDMG, golay, sequence, index, different, interference, indicate, mode, type, monostatic PPDU, DMG measurement setup

**C. DOCUMENTS CONSIDERED TO BE RELEVANT**

| Category* | Citation of document, with indication, where appropriate, of the relevant passages | Relevant to claim No. |
|---|---|---|
| A | CN 109155660 A (INTERDIGITAL PATENT HOLDINGS, INC.) 04 January 2019 (2019-01-04)<br>entire document | 1-40 |
| A | US 2015351102 A1 (SOLOMON TRAININ et al.) 03 December 2015 (2015-12-03)<br>entire document | 1-40 |
| A | CN 108702676 A (HUAWEI TECHNOLOGIES CO., LTD.) 23 October 2018 (2018-10-23)<br>entire document | 1-40 |
| A | US 2019208463 A1 (INTERDIGITAL PATENT HOLDINGS, INC.) 04 July 2019 (2019-07-04)<br>entire document | 1-40 |
| A | DJORDJE TUJKOVIC et al. "Interference Mitigation in MmWave Distribution Networks" *doc.: IEEE 802.11-18/0164r1*, 25 January 2018 (2018-01-25),<br>see pp. 2 and 11-15 | 1-40 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 May 2023** | **16 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/114342**

| Patent document cited in search report | | | Publication date (day/month/year) | Patent family member(s) | | | Publication date (day/month/year) |
|---|---|---|---|---|---|---|---|
| CN | 109155660 | A | 04 January 2019 | JP | 2019521565 | A | 25 July 2019 |
| | | | | US | 2021058121 | A1 | 25 February 2021 |
| | | | | US | 11575416 | B2 | 07 February 2023 |
| | | | | MX | 2018013862 | A | 21 March 2019 |
| | | | | EP | 3455958 | A1 | 20 March 2019 |
| | | | | EP | 3455958 | B1 | 09 March 2022 |
| | | | | TW | 201803294 | A | 16 January 2018 |
| | | | | TWI | 744327 | B | 01 November 2021 |
| | | | | AU | 2017264752 | A1 | 03 January 2019 |
| | | | | AU | 2017264752 | B2 | 12 August 2021 |
| | | | | US | 2023108498 | A1 | 06 April 2023 |
| | | | | WO | 2017196900 | A1 | 16 November 2017 |
| | | | | US | 2019068258 | A1 | 28 February 2019 |
| | | | | US | 10855350 | B2 | 01 December 2020 |
| | | | | KR | 20190016959 | A | 19 February 2019 |
| | | | | KR | 102344710 | B1 | 31 December 2021 |
| | | | | EP | 4033676 | A1 | 27 July 2022 |
| US | 2015351102 | A1 | 03 December 2015 | US | 9736857 | B2 | 15 August 2017 |
| CN | 108702676 | A | 23 October 2018 | JP | 2019516326 | A | 13 June 2019 |
| | | | | JP | 6710293 | B2 | 17 June 2020 |
| | | | | KR | 20190002692 | A | 08 January 2019 |
| | | | | KR | 102127316 | B1 | 26 June 2020 |
| | | | | EP | 3761709 | A1 | 06 January 2021 |
| | | | | US | 2022256400 | A1 | 11 August 2022 |
| | | | | WO | 2017193787 | A1 | 16 November 2017 |
| | | | | US | 2017332277 | A1 | 16 November 2017 |
| | | | | US | 11330465 | B2 | 10 May 2022 |
| | | | | EP | 4124121 | A1 | 25 January 2023 |
| | | | | RU | 2707725 | C1 | 28 November 2019 |
| | | | | EP | 3446514 | A1 | 27 February 2019 |
| | | | | EP | 3446514 | A4 | 10 April 2019 |
| | | | | EP | 3446514 | B1 | 28 October 2020 |
| US | 2019208463 | A1 | 04 July 2019 | CA | 3035973 | A1 | 15 March 2018 |
| | | | | CA | 3035973 | C | 27 October 2020 |
| | | | | KR | 20190064567 | A | 10 June 2019 |
| | | | | US | 10932184 | B2 | 23 February 2021 |
| | | | | JP | 2019526989 | A | 19 September 2019 |
| | | | | JP | 6849793 | B2 | 31 March 2021 |
| | | | | SG | 11201901981 | WA | 29 April 2019 |
| | | | | WO | 2018049224 | A1 | 15 March 2018 |
| | | | | EP | 3510819 | A1 | 17 July 2019 |

Form PCT/ISA/210 (patent family annex) (July 2022)